Europäisches Patentamt

(19) European Patent Office

Office européen des brevets

(11) Numéro de publication: **0 125 989**
**B1**

# (12) FASCICULE DE BREVET EUROPEEN

(45) Date de publication du fascicule du brevet:
**24.06.87**

(21) Numéro de dépôt: **84400935.7**

(22) Date de dépôt: **09.05.84**

(51) Int. Cl.⁴: **H 04 N 5/262**

(54) Procédé pour générer une image vidéo comportant une figure géométrique, et générateur de formes mettant en oeuvre ce procédé.

(30) Priorité: **11.05.83 FR 8307903**

(43) Date de publication de la demande:
**21.11.84 Bulletin 84/47**

(45) Mention de la délivrance du brevet:
**24.06.87 Bulletin 87/26**

(84) Etats contractants désignés:
**DE GB**

(56) Documents cités:
**FR - A - 2 317 836**
**US - A - 3 821 468**

**IEEE TRANSACTIONS ON BROADCASTING, vol. BC-19, no. 3, septembre 1973, pages 63-67, New York, US; P. LAPPALAINEN: "Digital circle-pattern generator for TV"**

(73) Titulaire: **THOMSON-CSF, 173, Boulevard Haussmann, F-75379 Paris Cedex 08 (FR)**

(72) Inventeur: **Chapuis, Franck, THOMSON-CSF SCPI 173, bld Haussmann, F-75379 Paris Cedex 08 (FR)**
Inventeur: **Urbain, Guy, THOMSON-CSF SCPI 173, bld Haussmann, F-75379 Paris Cedex 08 (FR)**
Inventeur: **Baubrand, Gilles, THOMSON-CSF SCPI 173, bld Haussmann, F-75379 Paris Cedex 08 (FR)**

(74) Mandataire: **Turlèque, Clotilde et al, THOMSON-CSF SCPI 19, avenue de Messine, F-75008 Paris (FR)**

## Description

L'invention concerne les effets spéciaux réalisés sur les images vidéo. Certains effets consistent à combiner une première et une seconde image, provenant de sources différentes, pour générer une image dont une portion est fournie par la première image et dont une autre portion est fournie par la seconde image. Pour réaliser cet effet on emploie un dispositif appelé générateur de formes électronique qui, en étant associé à un dispositif appelé commutateur à gain variable, permet de combiner deux signaux vidéo afin d'obtenir une image dont certaines parties sont fournies par l'un des signaux vidéo, et dont les autres parties sont fournies par l'autre signal vidéo. Par exemple un générateur de formes associé à un commutateur à gain variable permet de réaliser une image comportant un fond, fourni par un premier signal vidéo, et comportant un médaillon, à bordures floues, fourni par un second signal vidéo. Il est souhaitable de pouvoir réaliser des formes très diverses, variables au gré de l'utilisateur.

Pour élaborer les signaux de commande du commutateur, les générateurs de formes classiques, comprennent des générateurs de signaux en dents de scie, et des générateurs de signaux paraboliques. Ces générateurs de signaux peuvent être analogiques ou numériques. Par exemple, la demande de brevet français FR-A-2 317 836 décrit un générateur de signaux de commutation comportant des multiplicateurs et des additionneurs analogiques. Les générateurs analogiques sont peu stables dans le temps, à cause des variations de température, des tolérances des composants, du vieillissement, etc. Les générateurs numériques sont exempts du problème de stabilité des réglages et sont plus simples à mettre au point. Cependant les formes obtenues sont des figures simples, et sourtut les transformations géométriques réalisables sur les formes sont peu nombreuses. Par exemple, il est connu de réaliser une rotation d'un carré, mais pas d'un losange ou d'une étoile Il est connu de réaliser des bordures floues ou des bordures colorées, une translation, ou une multiplication des motifs, mais sans pouvoir réaliser simultanément une rotation. Le procédé selon l'invention permet non seulement de générer un plus grand nombre de formes, mais il permet en outre de transformer ces formes par une translation, une affinité, une rotation, et un effet de perspective, qui peuvent être combinés. Il permet aussi de réaliser des formes en «modulant» une figure simple dans une direction perpendiculaire à son tracé, indépendamment des directions du balayage de l'image, ce qui n'est pas possible avec les dispositifs connus.

Un premier objet de l'invention est un procédé pour générer une image vidéo comportant une figure géométrique, cette figure étant représentable dans des coordonnées cartésiennes par une équation de la forme H(X, Y) = constante, composée de fonctions monodimensionnelles, est caractérisé en ce qu'il consiste:

– à stocker une table de valeurs pour chacune des fonctions monodimensionnelles composant l'équation de la figure;

– à faire correspondre à chaque point de l'image à générer une valeur de X et une valeur de Y;

– à calculer au fur et à mesure du balayage de l'image à générer, une valeur M=H(X, Y) pour chaque point, en lisant dans les tables les valeurs des fonctions composant l'équation;

– à générer pour chaque point d'image un signal vidéo fonction de M, cette valeur traduisant l'appartenance du point à l'intérieur ou à l'extérieur de la figure, selon que M est inférieure ou supérieure à la valeur fixée pour la constante de l'équation de la figure.

Un second objet de l'invention est un dispositif générateur de formes électronique mettant en œuvre le procédé selon l'invention.

L'invention sera mieux comprise et d'autres détails apparaîtront à l'aide de la description ci-dessous et des figures l'accompagnant:

– les figures 1 à 11 représentent des transformations réalisées sur un exemple de figure générée par le procédé selon l'invention;

– les figures 12 à 17 illustrent le procédé selon l'invention avec d'autres exemples de figures générées;

– la figure 18 représente le schéma synoptique d'un exemple de réalisation du dispositif selon l'invention;

– les figures 19 et 20 représentent deux variantes d'une partie de cet exemple de réalisation.

Dans un premier exemple, le procédé selon l'invention est appliqué pour générer un carré, puis ce carré est transformé en losange par une affinité, puis il est déplacé par une rotation et une translation. Dans un repère cartésien un carré est défini par une équation de la forme: H(x, y) = |x| + |y| = constante, s'il est centré sur l'origine du repère et si ses diagonales sont confondues avec les axes du repère. Pour tout point intérieur au carré H(x, y) est inférieur à la constante, alors que pour tout point extérieur H(x, y) est supérieur à la constante. La valeur de la constante définit donc la taille du carré.

Pour générer une image comportant un carré, la connaissance de la fonction H(x, y) = |x| + |y| suffit à définir la forme du carré, mais il reste à définir sa taille et sa position.

Pour générer un signal vidéo correspondant à l'image souhaitée il suffit de déterminer pour chaque point, au fur et à mesure du balayage, s'il est, ou n'est pas, à l'intérieur du carré. Le résultat de cette détermination permet de commander, par exemple, un commutateur de signaux vidéo.

Si les points de l'image à générer sont repérés par des coordonnées (x, y) dans le même repère que celui utilisé pour avoir l'équation H(x, y) = constante, il est aisé de savoir si un point est à l'intérieur, ou à l'extérieur du carré, en comparant la valeur de H(x, y) en ce point, à la valeur de la constante définissant la taille du carré. Mais, le balayage des points d'une image étant réalisé dans un ordre fixé, il n'est pas possible de considérer un repère unique se déplaçant quand on déplace le carré à générer, c'est pourquoi on distingue deux repères, l'un fixe, l'autre mobile.

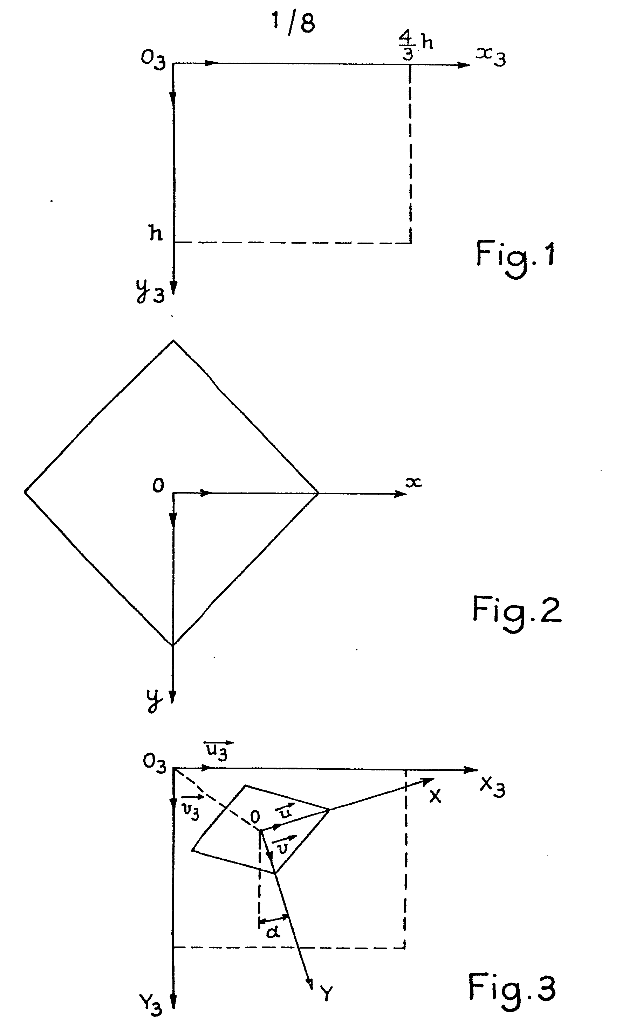

Sur la figure 1 est représenté un repère cartésien $(O_3, x_3, y_3)$, dit repère fixe car il est lié à l'image que l'on souhaite obtenir sur un écran vidéo. Dans une première étape les coordonnées $x_3$ et $y_3$ ont pour unité une unité de longueur, par exemple le millimètre. Une image de télévision ayant une longueur égale a $\frac{4}{3}$ de sa largeur des pointillés délimitent, avec les axes, les bords d'une image de largeur h et de longueur $\frac{4}{3}$ h. Seule sera visible la partie de l'image générée qui sera située dans ce rectangle.

La figure 2 représente une image, dite image initiale, qui est constituée par un carré, et dont sera déduite l'image souhaitée, grâce à des transformations géométriques. L'image obtenue par ces transformations sera appelée, dans la suite, image transformée. Les points de cette image initiale sont repérés dans un repère cartésien $(O, x, y)$. Dans une première étape les unités considérées sur ces axes sont des unités de longueur, par exemple le millimètre. Dans cet exemple, l'origine 0 du repère est située au centre du carré et les axes sont confondus avec les diagonales du carré.

La figure 3 représente l'image transformée de l'image initiale par une transformation composée d'une rotation d'angle $\alpha$ autour de l'origine 0 du repère mobile, d'une affinité de rapport $A_x$ dans la direction de l'axe $\overrightarrow{Ox}$, et de rapport $A_y$ dans la direction de l'axe $\overrightarrow{Oy}$, et d'une translation définie par le vecteur $\overrightarrow{O_3O}$ reliant les origines des deux repères. Les coordonnées $(x_3, y_3)$ et $(x, y)$ sont liées par la relation suivante:

$$\begin{bmatrix} x_3 \\ y_3 \end{bmatrix} = \begin{bmatrix} A_x \\ A_y \end{bmatrix} \times \begin{bmatrix} \cos\alpha, & -\sin\alpha \\ \sin\alpha, & \cos\alpha \end{bmatrix} \times \left( \begin{bmatrix} x \\ y \end{bmatrix} + \begin{bmatrix} x_{O3} \\ y_{O3} \end{bmatrix} \right) \quad (1)$$

$(x_{03}, y_{03})$ sont les coordonnées de l'origine $O_3$ dans le repère mobile défini précédemment. La relation inverse de celle-ci permet de déterminer les coordonnées $(x, y)$, d'un point de l'image initiale correspondant à un point de coordonnées $(x_3, y_3)$ de l'image transformée:

$$x = \frac{\cos\alpha}{A_x} (x_3 - x_{03}) + \frac{\sin\alpha}{A_x} (y_3 - y_{03})$$

$$\tag{2}$$

$$y = -\frac{\sin\alpha}{A_y} (x_3 - x_{03}) + \frac{\cos\alpha}{A_y} (y_3 - y_{03})$$

En pratique le repérage des points de l'image initiale et de l'image transformée n'est pas fait par rapport à une unité de longueur, mais par rapport au pas d'une grille, puisqu'une image de télévision numérique est considérée comme constituée d'éléments rectangulaires discontinus, appelés généralements points. Par exemple une image de télévision peut être constituée de 720 points par ligne, et comporter 576 lignes par image.

Dans cet exemple les unités de longueur dans le repère fixe sont alors:

$$u_3 = \frac{4}{3} \times \frac{h}{720}$$

$$v_3 = \frac{h}{576}$$

Les unités de longueur de repère mobile liées à l'image initiale sont modifiées de manière analogue. Les valeurs sont les mêmes que pour le repère fixe si l'image initiale est une image de télévision, quelconque, comportant 720 points par ligne, et 576 lignes par image. Si, par contre, l'image initiale est une image constituée de N points par ligne, et comporte M lignes par image, les unités sont alors:

$$u = \frac{4}{3} \times \frac{h}{N}$$

$$v = \frac{h}{M}$$

Après ces changements d'unités, les coordonnées dans le repère mobile et dans le repère fixe sont notées respectivement X, Y) et $(X_3, Y_3)$. La relation (2) devient:

$$X = \frac{\cos\alpha}{A_x} (X_3 - X_{03}) \cdot \frac{u_3}{u} + \frac{\sin\alpha}{A_x} (Y_3 - Y_{03}) \cdot \frac{v_3}{v}$$

$$\tag{3}$$

$$Y = -\frac{\sin\alpha}{A_y} (X_3 - X_{03}) \cdot \frac{u_3}{u} + \frac{\cos\alpha}{A_y} (Y_3 - Y_{03}) \cdot \frac{v_3}{v}$$

$(X_{03}, Y_{03})$ sont les coordonnées de $O_3$ dans le repère mobile après les changements d'unités. La relation (3) peut s'écrire sous la forme:

$$\begin{bmatrix} X \\ Y \end{bmatrix} = \begin{bmatrix} I_{xx}, Y_{xy} \\ I_{yx}, I_{yy} \end{bmatrix} \begin{bmatrix} X_3 - X_{03} \\ Y_3 - Y_{03} \end{bmatrix} \quad (4)$$

où les coefficients $I_{xx}$, $I_{xy}$, $I_{yx}$, $I_{yy}$ sont des coefficients constants pour une transformation géométrique donnée.

Les valeurs de X et Y sont constituées respectivement par le rang du point considéré, sur sa ligne, et par le rang de sa ligne dans l'image initiale. Pour générer un signal vidéo correspondant à l'image transformée un dispositif de stockage est lu à une adresse (X, Y) donnée par la relation (4), à l'instant où doit être reconstitué le signal vidéo correspondant au point de coordonnées $(X_3, Y_3)$ de l'image transformée. Les coordonnées $(X_3, Y_3)$ sont constituées par le rang de ce point sur sa ligne, et par le rang de saligne dans l'image transformée. Le calcul de la valeur de X et Y en fonction de celle de $X_3$ et $Y_3$ par la relation (4) est très long à réaliser puisqu'il comporte quatre multiplications. Le procédé selon l'invention détermine X et Y par une récurrence permettant de raccourcir beaucoup le temps de calcul. Il consiste à calculer une valeur de X et Y en fonction de la valeur calculée pour le point immédiatement précédent au cours du balayage de l'image transformée. Le passage d'un point de coordonnées $(X_3\text{-}1, Y_3)$, au point suivant de coordonnées $(X_3, Y_3)$ se traduit, d'après la relation (4), par une variation de X égal à $I_{xx}$, et par une variation Y égale à $I_{yx}$:

$$X(X_3, Y_3) = X(X_3\text{-}1, Y_3) + I_{xx}$$
$$Y(X_3, Y_3) = Y(X_3\text{-}1, Y_3) + I_{yx} \tag{5}$$

Pour chaque point de l'image transformée le calcul des valeurs d'adresse de lecture dans le dispositif de stockage se réduit à ajouter un incrément constant $I_{xx}$ à la valeur de X calculée immédiatement précédemment, et à ajouter un incrément constant $I_{yx}$ à la valeur de Y calculée immédiatement précédemment.

Au début de chaque ligne de l'image transformée la valeur de X et de Y est calculée par une relation qui n'est pas non plus la relation (4), mais une relation de récurrence qui en est déduite:

$$X(O, Y_3) = X(O, Y_3\text{-}1) + I_{xy}$$
$$Y(O, Y_3) = Y(O, Y_3\text{-}1) + I_{yy} \tag{6}$$

Et pour le premier point de la première ligne de l'image transformée la relation (4) donne les valeurs suivantes:

$$X(O, O) = -I_{xx} \cdot X_{03} - I_{xy} \cdot Y_{03}$$
$$Y(O, O) = -I_{YX} \cdot X_{03} - I_{yy} \cdot Y_{03} \tag{7}$$

Le calcul des valeurs X(O, O) et Y(O, O) comporte quatre multiplications qui nécessitent un long temps de calcul, mais cela est sans importance car ce calcul n'a lieu qu'une fois par image et peut être fait pendant le temps séparant l'analyse de deux images.

Une transformation géométrique plus complexe peut être composée non seulement d'une rotation, d'une affinité, et d'une translation mais aussi d'une projection procurant un effet de perspective. Dans ce cas les points de l'image transformée sont repérés dans un repère cartésien $(O_3, X_3, Y_3, Z_3)$, le plan de l'écran vidéo où se forme l'image transformée étant le plan $(O_3, X_3, Y_3)$. Pour réaliser un effet de perspective chaque point de l'image initiale est projeté sur le plan $(O_3, X_3, Y_3)$

selon une droite passant par un point $P_F$, dit point de fuite.

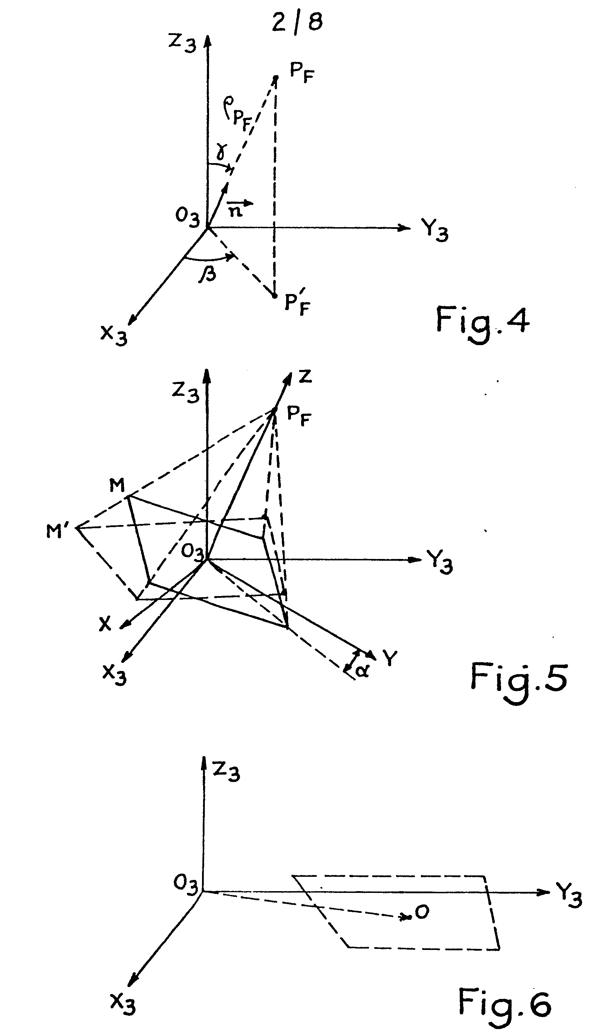

La figure 4 représente le point de fuite $P_F$ dans le repère $(O_3, X_3, Y_3, Z_3)$. Il a pour coordonnées sphériques:

$$(8) \begin{cases} \rho_{PF} & \text{tel que } \overrightarrow{O_3P_F} = \rho_{PF} \cdot \vec{n}, \text{ où } \vec{n} \text{ est un vecteur unité} \\ \\ \beta = (\overrightarrow{O_3X_3}, \overrightarrow{O_3 P'_F}) & \text{où } P'_F \text{ est la projection orthogonale de } P_F \text{ sur le plan } (O_3, X_3, Y_3) \\ \\ \gamma = (\overrightarrow{O_3Z_3}, \overrightarrow{O_3P_F}) & \end{cases}$$

Les points de l'image initiale sont repérés dans un repère cartésien $(O_3, X, Y, Z)$, dit repère mobile, dont l'axe $\overrightarrow{O_3Z}$ passe par le point de fuite $P_F$, dans le sens $\overrightarrow{O_3P_F}$.

La figure 5 représente le repère fixe, le repère mobile, une figure géométrique en traits pleins, et une figure géométrique en pointillés. L'image initiale, qui n'est pas représentée sur cette figure, est constituée par un carré situé dans le plan $O_3 X Y$ et centré en $O_3$. Une rotation d'angle $\alpha$, autour de $O_3$ dans le plan $O_3 X Y$, et une affinité de coefficients $(A_x, A_y, 1)$ sont réalisées sur l'image initiale. La figure transformée obtenue par ces premières transformations est constituée par la figure représentée en traits pleins, qui est un losange dont les diagonales ont un décalage angulaire $\alpha$ par rapport aux axes $O_3X$ et $O_3Y$. Chaque point de l'image initiale, de coordonnées (X, Y, Z) dans le repère mobile $O_3X$, $O_3Y$, $O_3Z$, a pour transformé, dans ce même repère, un point de coordonnées $(X_2, Y_2, Z_2)$ données par les formules suivantes:

$$\begin{bmatrix} X_2 \\ Y_2 \\ Z_2 \end{bmatrix} = \begin{bmatrix} \cos\alpha & -\sin\alpha & 0 \\ \sin\alpha & -\cos\alpha & 1 \\ 0 & 0 & 1 \end{bmatrix} \begin{bmatrix} A_x & 0 & 0 \\ 0 & A_y & 0 \\ 0 & 0 & 1 \end{bmatrix} \begin{bmatrix} X \\ Y \\ Z \end{bmatrix} \tag{9}$$

Chaque point M, de coordonnées $(X_2, Y_2, Z_2)$ de ce losange est projeté en un point M', dans la direction M $P_F$, sur le plan $O_3 X_3 Y_3$, pour constituer une image transformée qui est représentée en pointillés sur la figure. Le centre du carré de l'image initiale, n'a pas été modifié par la rotation et l'affinité, et il n'est pas modifié par cette projection, il reste au point $O_3$. Il est à noter qu'une partie des points du losange sont projetés sur une première face du plan $O_3 X_3 Y_3$, et qu'une autre partie de ces points sont projetées sur l'autre face de ce plan. Le point M a pour coordonné $(X_2, Y_2, O)$ dans le reprère mobile, et $(X_1, Y_1, Z_1)$ dans le repère fixe, qui sont reliées par la relation suivante:

$$\begin{bmatrix} X_1 \\ Y_1 \\ Z_1 \end{bmatrix} = \begin{bmatrix} \cos\beta \cdot \cos\gamma, & -\sin\beta, & \sin\gamma \cdot \cos\beta \\ \cos\gamma \cdot \sin\beta, & \cos\beta, & \sin\gamma \cdot \sin\beta \\ -\sin\gamma, & O, & \cos\gamma \end{bmatrix} \begin{bmatrix} X_2 \\ Y_2 \\ O \end{bmatrix} \tag{10}$$

Le point M' étant la projection du point M dans la direction $MP_F$, les vecteurs $\overrightarrow{P_FM}$ et $\overrightarrow{P_FM'}$ sont colinéaires et sont liés par la relation suivante:

$$\overrightarrow{P_F M} = k.\overrightarrow{P_F M'}$$

$$\overrightarrow{P_F O_3} + \overrightarrow{O_3 M} = k.(\overrightarrow{P_F O_3} + \overrightarrow{O_3 M'})$$

$$\text{donc } \overrightarrow{O_3 M'} = \frac{l}{k} \cdot \overrightarrow{O_3 M} - \frac{(l-k)}{k} \cdot \overrightarrow{O_3 P_f} = \frac{l}{k} \cdot \overrightarrow{O_3 M} - \frac{l-k}{k} \cdot \rho P_F \cdot \overrightarrow{n}$$

Les coordonnées de M et M', dans le repère fixe, sont donc liées par les relations:

$$X_3' = \frac{X_l}{k} - \frac{l-k}{k} \cdot \rho_{PF} \cdot \sin\gamma \cdot \cos\beta$$

$$Y_3' = \frac{Y}{k} - \frac{l-k}{k} \cdot \rho_{PF} \cdot \sin\gamma \cdot \sin\alpha \qquad (11)$$

$$Z_3' = \frac{Z_l}{k} - \frac{l-k}{k} \cdot \rho_{PF} \cdot \cos\gamma$$

La figure 6 représente la figure transformée définitive obtenue par une dernière transformation qui est une translation, de vecteur $\overrightarrow{O_3 O}$, de la figure projetée obtenue précédemment. Les coordonnées d'un point de l'image transformée définitive sont données par la relation suivante:

$$\begin{bmatrix} X_3 \\ Y_3 \\ Z_3 \end{bmatrix} = \begin{bmatrix} X_3' \\ Y_3' \\ Z_3' \end{bmatrix} + \begin{bmatrix} X_{03} \\ Y_{03} \\ Z_{03} \end{bmatrix} \qquad (12)$$

où $(X_{03}, Y_{03}, Z_{03})$ sont les composantes du vecteur translation $\overrightarrow{O_3 O}$.

Les relations (9) à (12) lient les valeurs des coordonnées $(X, Y, Z)$ et $(X_3, Y_3, Z_3)$ d'un point de l'image initiale, repéré dans le repère mobile, et d'un point de l'image transformée, repéré dans le repère fixe. L'inversion de ces relations permet de déterminer les coordonnées d'un point de l'image initiale correspondant à un point donné de l'image transformée. Ces relations sont les suivantes:

$$X = k \, D_{xx} \cdot (X_3 - X_{03}) + D_{xy} \cdot (Y_3 - Y_{03})$$

$$Y = k \, D_{yx} \cdot (X_3 - X_{03}) + D_{yy} \cdot (Y_3 - Y_{03}) \qquad (13)$$

$$\frac{l}{k} = l - k_x \cdot (X_3 - X_{03}) + k_y \cdot (Y_3 - Y_{03})$$

avec

$$D_{xx} = \frac{\cos\alpha \cos\beta \cos\gamma + \sin\alpha \sin\beta}{Ax}$$

$$D_{xy} = \frac{\cos\alpha \sin\beta \cos\gamma + \sin\alpha \cos\beta}{Ay}$$

$$D_{yx} = \frac{-\sin\alpha \cos\beta \cos\gamma + \cos\alpha \sin\beta}{Ay}$$

$$D_{yy} = \frac{-\sin\alpha \sin\beta \cos\gamma + \cos\alpha \cos\beta}{Ay}$$

$$k_x = \frac{\cos\beta \sin\gamma}{PF} \qquad (14)$$

$$k_y = \frac{\sin\beta \sin\gamma}{\rho_{PF}}$$

L'application des formules (13) nécessite le calcul de la fonction de $X_3$ et $Y_3$, c'est-à-dire pour chaque point. Ce calcul est long car il nécessite deux multiplications dans le cas général. Par contre, dans le cas particulier où le point de fuite est rejeté à l'infini, $\rho P_F$ est infini donc $k = l$ en permanence.

La relation (13) peut être simplifiée et mise sous la forme d'une relation de récurrence analogue à celle trouvée en l'absence d'effets de perspective:

$$X(X_3, Y_3) = X(X_3-1, Y_3) + D_{xx}$$

$$Y(X_3, Y_3) = Y(X_3-1, Y_3) + D_{yx} \qquad (15)$$

Pour le premier point de chaque ligne la relation de récurrence est la suivante:

$$X(O, Y_3) = X(O, Y_3-1) + D_{xy}$$

$$Y(O, Y_3 = Y(O, Y_3-1) + D_{yy} \qquad (16)$$

Pour le premier point d'une image la relation (13) donne les valeurs suivantes:

$$X(O, O) = -D_{xx} \cdot X_{03} - D_{xy} \cdot Y_{03}$$

$$Y(O, O) = -D_{yx} \cdot X_{03} - D_{yy} \cdot Y_{03} \qquad (17)$$

Cette simplification limite les effets de perspective possibles mais a le grand avantage de fournir une transformation pas plus compliquée à mettre en œuvre qu'une transformation sans effet de perspective, puisque les formules de récurrence sont de la même forme. Ces calculs peuvent être réalisés en temps réel avec la technologie actuelle.

Le procédé selon l'invention est avantageux car il permet de générer la figure en stockant une faible quantité de données et permet de réaliser une transformation géométrique par des calculs portant sur les valeurs d'adresses de ces données. Par exemple, une image initiale constituée par un carré tel que celui représenté sur la figure 2, permet d'obtenir une image transformée comportant un losange ayant des dimensions quelconques, une position quelconque, et éventuellement une déformation donnant un effet de perspective, en stockant seulement deux tables donnant les valeurs de |X| et |Y| en fonction des valeurs de X et Y. Dans cet exemple la figure peut être représentée par une équation de la forme:

$$H(X, Y) = |X| + |Y| = \text{constante.}$$

Cette équation définit une famille de carrés centrés sur l'origine, chaque valeur de la constante correspondant à un carré différent. Chaque point du repère O, X, Y, appartient à l'intérieur ou à l'extérieur d'un carré donné selon que la valeur $H(X, Y)$ est inférieure ou supérieure à la valeur de la constante correspondant au carré donné. Pour générer un signal vidéo correspondant à une figure constituée par un carré, il suffit de repérer chaque point de l'image à obtenir par des coordonnées cartésiennes $(X_3, Y_3)$ et de calculer pour chaque point la valeur de $H(X, Y)$ en fonction de $X_3$ et $Y_3$ par les formules mentionnées précédemment, puis de comparer cette valeur par rapport à la constante fixée qui détermine le carré à obtenir. Si la valeur calculée est égale à la constante le point considéré appartient à la bordure du carré, si la valeur calculée est inférieure à la constante le point considéré appartient à l'intérieur du carré, et si la valeur calculée est supérieure à la constante le point considéré appartient à l'extérieur du carré. Il suffit de commander ensuite un commutateur de signaux vidéo par un signal logique résultant de cette comparaison.

Pour déterminer la valeur de $H(X, Y)$, les valeurs X et Y sont stockées respectivement dans deux tables, ces deux tables sont adressées respectivement par les valeurs X et Y. Le dispositif de stockage est constitué d'une part de ces deux tables, et d'autre part d'un additionneur permettant d'additionner les valeurs lues respectivement dans chacune de ces tables. Le dispositif de stockage n'est donc pas une mémoire d'image, mais un dispositif beaucoup moins coûteux constitué des deux tables et d'un additionneur.

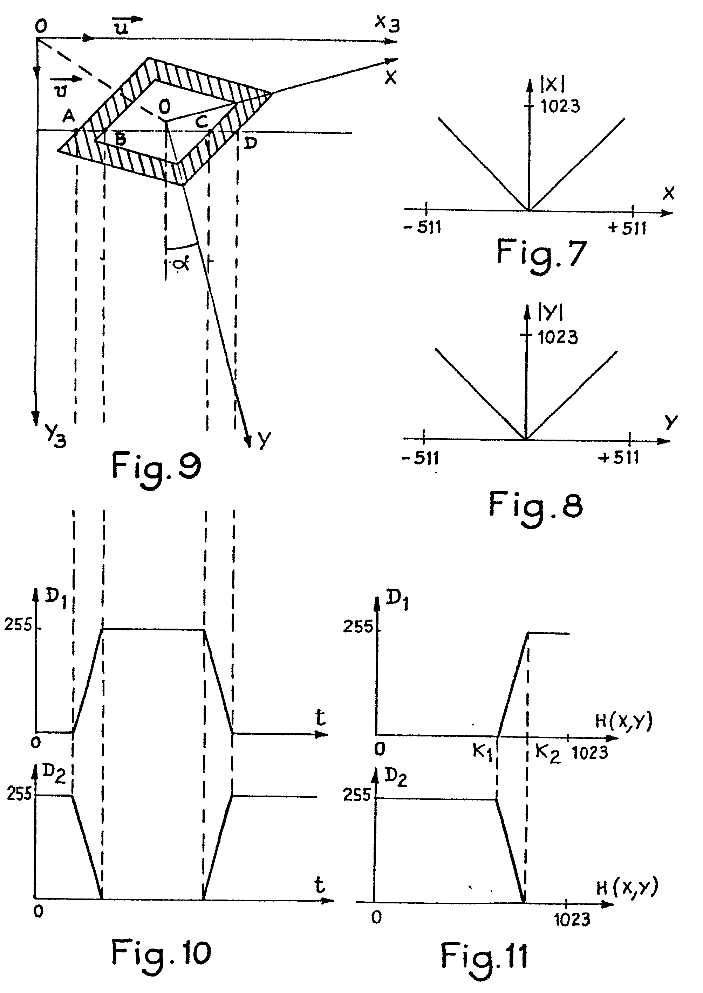

Les figures 7 et 8 représentent les graphes des valeurs contenues dans les tables dans un exemple de réalisation permettant de générer une image initiale constituée par un carré. Les calculs d'adresses par les formules mentionnées précédemment permettent d'obtenir un losange ayant des dimensions et une position quelconque et ayant éventuellement un effet de perspective. Sur les figures 7 et 8 les variables X et Y prennent les valeurs allant de $-511$ à $+511$, ce qui signifie que chacune des tables stocke 1024 mots de 9 bits. Les dimensions du losange obtenu dans l'image transformée peuvent être modifiées, d'une part en réalisant une affinité, mais aussi en modifiant la valeur de la constante à laquelle est comparée la valeur de $H(X, Y)$.

Dans le cas où un générateur de formes électronique est utilisé en association avec un commutateur à gain variable pour obtenir une image où une partie, par exemple en forme de losange, est fournie par un premier signal vidéo, alors qu'une autre partie, le fond, est fournie par un second signal vidéo, on peut souhaiter réaliser une transition floue sur les bords du losange. La figure 9 représente une image transformée correspondant à cet exemple. La zone hachurée est une zone floue obtenue en additionnant les deux signaux vidéo après les avoir multipliés respectivement par des coefficients variant en sens inverse. Ces coefficients sont proportionnels à des valeurs numériques $D_1$ et $D_2$ fournis par deux sorties du générateur de formes électronique, et qui sont représentées sur la figure 10 en fonction du temps, et sur la figure 11 en fonction de la valeur $H(X, Y)$. Les variations des valeurs $D_1$ et $D_2$ représentées sur la figure 10 correspondent au balayage de la ligne ABCD de l'image transformée représentée sur la figure 9. Les points A, B, C, D sont les points d'intersection de cette ligne avec les frontières de la zone floue. Pendant le balayage du segment AB la valeur $D_1$ passe de 0 à 255 alors que la valeur $D_2$ passe de 255 à 0 dans le même temps. Pendant la durée du balayage du segment CD la valeur $D_1$ passe de 255 à 0 alors que la valeur $D_2$ passe de 0 à 255. Lorsqu'il n'y a pas à réaliser une transistion floue la valeur de $H(X, Y)$ peut être comparée à la constante par un simple comparateur numérique. Par contre lorsqu'il est nécessaire de réaliser une transition floue le comparateur est remplacé par une mémoire fournissant deux valeurs numériques $D_1$ et $D_2$ selon les graphes donnés par la figure 11. La taille du losange et la largeur de la bordure floue sont déterminées par deux constantes $K_1$, $K_2$ telles que: $o < K_1 < K_2 < 1023$. Quand $H(X, Y)$ varie de 0 à 1023 la valeur $D_1$ reste constante et égale à 0 pour $H(X, Y) < K_1$; elle augmente linéairement jusqu'à 255 pour $H(X, Y)$ variant de $K_1$ à $K_2$; puis elle est constante pour $H(X, Y)$ variant de $K_2$ à 1023. La valeur $D_2$ est constante, et égale à 255 pour $H(X, Y) < K_1$; puis elle décroît linéairement de 255 à 0 pour $H(X, Y)$ variant de $K_1$ à $K_2$, puis elle est constante, et égale à 0, pour $H(X, Y)$ variant de $K_2$ à 1023.

Un autre effet peut être obtenu sur la bordure d'une figure, il consiste à entourer la découpe, constituée par le losange, d'une bordure colorée ayant une teinte fixée. Dans ce cas le générateur de formes électronique est associé non seulement à un commutateur à gain variable possédant deux voies, mais aussi à un commutateur permettant d'acheminer un signal vidéo correspondant à la teinte de la bordure souhaitée. Le générateur de formes électroniques fournit à ces commutateurs trois signaux binaires: un premier signal prend la valeur 0 pour $H(X, Y) < K_2$ et la valeur 255 pour $H(X, Y) > K_2$; un deuxième signal prenant la valeur 255 pour $H(X, Y) > K_2$, et prenant la valeur 0 dans le cas contraire; et un troisième signal prenant la valeur 255 pour $K_1 < H(X, Y) < K_2$ et prenant la valeur 0 dans le cas contraire. Le premier signal autorise le passage du signal vidéo correspondant au fond de l'image transformée, le second signal autorise le passage du signal vidéo correspondant à l'intérieur de la figure découpée, et le troisième signal autorise le passage du signal vidéo générant le teinte souhaitée pour la bordure. Ces trois signaux peuvent être générés, soit par une combinaison de comparateurs numériques, soit par une mémoire recevant pour valeurs d'adresses les valeurs $H(X, Y)$ et fournissant les trois signaux binaires sur une sortie de données.

Le procédé selon l'invention peut être généralisé à toute figure pouvant être stockée dans un dispositif de stockage adressable par les valeurs de coordonnées (X, Y) repérant les points de cette figure dans un repère cartésien. Le stockage d'une figure dans un dispositif adressable par les coordonnées X et Y est particulièrement simple lorsque l'équation de la figure peut être décomposée en une combinaison de fonctions monodimensionnelles, comme c'est le cas pour l'équation $H(X, Y) = |X| + |Y|$ = constante. En règle générale le dispositif de stockage, qui n'est pas une mémoire d'image, nécessite une mémoire de capacité faible. Il contient une table de valeurs pour chaque fonction monodimensionnelles. Chaque point $(X_3, Y_3, O)$ considéré dans l'image transformée, est représenté par un mot binaire M obtenu en lisant dans les tables les valeurs des fonctions composant l'équation, à des adresses fonctions des valeurs d'adresses X et Y appliquées au dispositif de stockage, puis en calculant la valeur de l'équation à partir des valeurs lues dans les tables. Ce procédé est particulièrement simple à mettre en œuvre lorsque l'équation est de la forme $F(X) + G(Y)$ = constante, car il suffit de deux tables: l'une donnant les valeurs $F(X)$ en fonction des valeurs de X, et l'autre donnant les valeurs de $G(Y)$ en fonction des valeurs de Y. Les valeurs fournies par ces deux tables sont additionnées pour déterminer la valeur de l'équation et obtenir une valeur $H(X, Y)$ traduisant l'appartenance ou la non-appartenance du point de coordonnées (X, Y) de l'image initiale, à l'intérieur de la figure, selon que cette valeur est inférieure ou supérieure à la valeur donnée à la constante dans l'équation qui définit la figure.

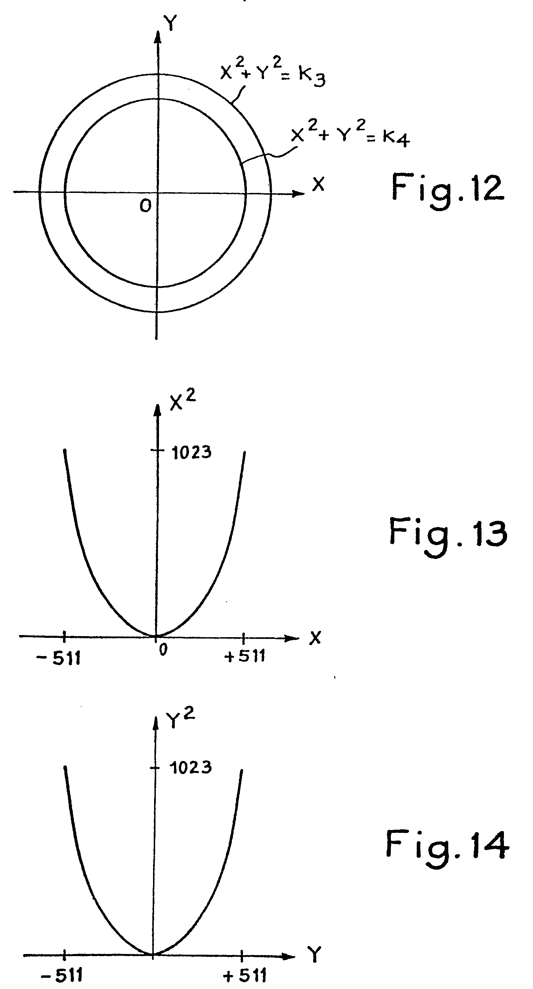

La figure 12 représente un autre exemple de figure pouvant être représentée par une équation composée de deux fonctions monodimensionnelles. Dans cet exemple la figure constituant l'image initiale est un cercle centré sur l'origine O du repère mobile. Il a pour équation $X^2+Y^2$ = constante. Les transformations géométriques décrites précédemment permettent d'obtenir notamment une découpe en forme d'ellipse, ou une découpe en forme d'ellipse déformée par un effet de perspective. Dans cet exemple la dispositif de stockage comporte une mémoire stockant une table des valeurs de $X^2$ en fonction des valeurs de X et une table des valeurs de $Y^2$ en fonction des valeurs de Y, et un additionneur.

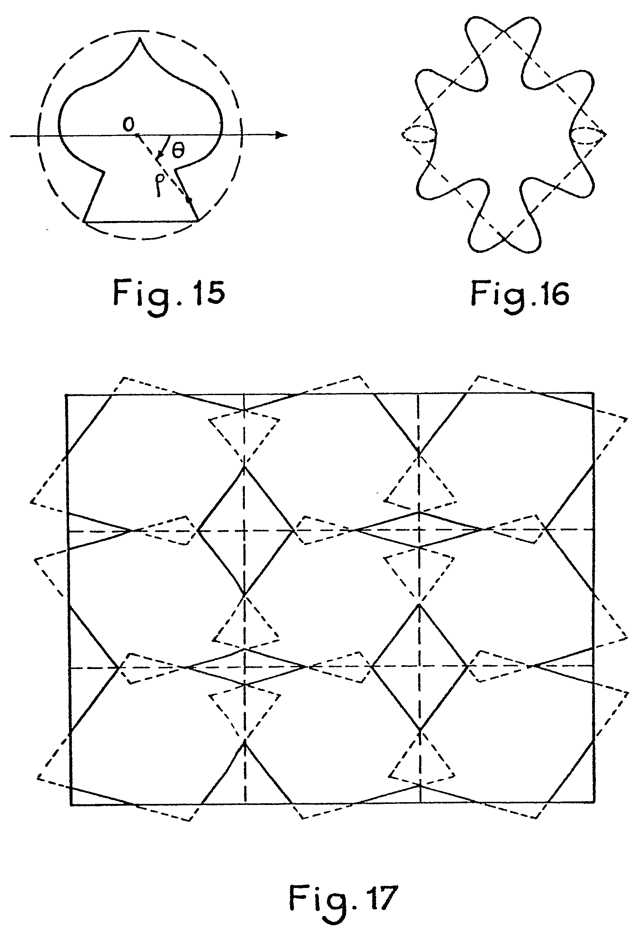

Les figures 13 et 14 représentent les graphes des valeurs contenues dans les deux tables du dispositif de stockage pour générer n'importe quel cercle, quelque soit son diamètre. X et Y varient entre −511 et +511 alors que $X^2$ et $Y^2$ prennent les valeurs comprises entre 0 et 1023. Le nombre de valeurs stockées est égal à 1024 dans chacune des tables ce qui permet de générer une découpe dont les bords paraissent très réguliers. Si la valeur $X^2+Y^2$ est comparée à des constantes $K_3$ et $K_4$ telles que $K_3 \neq K_4$, les deux figures correspondantes sont des cercles centrés sur O et de rayons différents. Dans cet exemple la valeur de la constante définissant le cercle doit être choisie proche de 1023 pour bénéficier d'une plus grande régularité du tracé, une réduction de la taille du cercle étant toujours possible en réalisant une affinité de rapport inférieur à 1. Il serait possible de garder un rapport d'affinité égal à 1 et de réduire la taille du cercle en prenant une faible valeur pour la constante à laquelle est comparée la valeur de l'équation, mais alors la figure obtenue serait moins régulière, des discontinuités en marches d'escalier seraient plus facilement visibles sur l'image transformée car les paraboles constituant les graphes de $X^2$ et $Y^2$ ont une faible pente au voisinage des faibles valeurs.

Certaines figures n'ont pas d'équations simples en coordonnées cartésiennes mais par contre sont facilement représentables en coordonnées polaires ($\rho$, $\varphi$, par exemple l'as de pique ou bien un losange dont les côtés sont des sinusoïdes. Ces exemples sont représentés sur les figures 15 et 16 respectivement. L'as de pique peut être considéré comme un cercle modulé par une fonction de l'angle $\varphi$, alors que le losange, dont les côtés sont des sinusoïdes de période égale à deux fois la longueur d'un côté, peut être considéré comme étant un carré dont les côtés sont modulés par une courbe orthogonale qui est en l'occurrence une sinusoïde.

D'une façon générale une figure géométrique qui est représentable en coordonnées polaires ($\rho$, $\varphi$) par une équation de la forme $\rho(\varphi) \cdot (1+g(\varphi))$ = constante peut être considérée comme un cercle dont le rayon est modulé par une fonction de $\varphi$. Le procédé de stockage de la figure consiste à stocker sept tables contenant respectivement: les valeurs de $X^2$, $Y^2$, − Log X, Log Y, en fonction de (X, Y), les valeurs de $\rho = \sqrt{X^2+Y^2}$ en fonction de $X^2+Y^2$, les valeurs de $\varphi = $ Arctg $\dfrac{Y}{X}$ en fonction de Log X et de Log Y, et les valeurs de $g(\varphi)$ en fonction de $\varphi$; et consiste à déterminer un mot binaire M en lisant dans les tables $X^2$, $Y^2$, − Log X, Log Y, puis en calculant $X^2+Y^2$ et Log Y − Log X, puis en lisant dans les tables la valeur de $\rho - \sqrt{X^2+Y^2}$ et $\varphi = $ Arctg $\dfrac{Y}{X}$ , puis en lisant dans les tables $g(\varphi)$, puis en calculant $\rho(\varphi) \cdot (1+g(\varphi))$. La valeur obtenue est comparée par rapport à une constante qui définit la taille de la figure. Si la valeur obtenue est inféirieure à la constante le point de coordonnées (X, Y) de l'image initiale est à l'intérieur de la figure, sinon il est à l'extérieur.

De même, d'une façon générale une figure géométrique qui peut être représentée par une équation de la forme:

$(|X| + |Y|) \cdot (1+h(|X| − |Y|))$ = constante, en coordonnées cartésiennes (X, Y), peut être considérée comme une figure déduite d'un carré par une modulation des côtés par une courbe orthogonale. Le procédé de stockage de la figure consiste alors à la stocker sous la forme de sept tables contenant respectivement les valeurs de: $|X|$ en fonction des valeurs de X, les valeurs de $−|Y|$ en fonction des valeurs de Y, et les valeurs de $h(|X|−|Y|)$ en fonction des valeurs de $(|X|−|Y|)$; et consiste à restituer pour chaque point de coordonnées (X, Y) de l'image initiale un mot binaire M déterminé en lisant les valeurs $|X|$, $|Y|$, $−|Y|$

dans les tables, puis en calculant |X| + |Y| et |X| − |Y|, puis en lisant h(|X| − |Y|) dans les tables, puis en calculant:

$$M = (|X| + |Y|) \cdot (1 + h(|X| − |Y|))$$

Cette valeur est ensuite comparée à la constante de l'équation qui définit la figure, le point (X, Y) étant à l'intérieur de la figure si la valeur de M est inférieure à la constante, et étant extérieur à la figure si la valeur M est supérieure à la constante.

Ces deux procédés de stockage permettent de réaliser des figures très diverses en utilisant des moyens de stockage comportant des tables numériques nécessitant une faible capacité de mémoire et comportant des opérateurs arithmétiques: additionneurs, soustracteurs, multiplicateurs. Un tel dispositif de stockage est de toute façon beaucoup moins coûteux qu'une mémoire d'image.

Un effet particulièrement intéressant est la multiplication de motifs, avec ou sans effet de miroir. La figure 17 représente une image transformée obtenue en multipliant un motif trois fois horizontalement et trois fois verticalement, chaque dédoublement du motif est réalisé avec un effet de miroir, c'est-à-dire une symétrie par rapport à un axe.

Pour réaliser un effet de multiplication horizontale de l'image initiale dans l'image transformée, sans effet de miroir, le procédé consiste à réinitialiser la valeur des adresses de lecture X et Y périodiquement au cours de chaque ligne de balayage de l'image transformée au lieu de continuer à appliquer les formules de récurrence (15) tout au long de la ligne. La réinitialisation est faite avec les valeurs données par les formules (16), exactement comme pour le premier point de la ligne. Dans cet exemple, pour obtenir une multiplication par trois horizontalement il faut réaliser l'initialisation de la valeur de X et Y à une fréquence égale à trois fois la fréquence de balayage des lignes.

Pour réaliser une multiplication verticale, sans effet de miroir, la valeur de X et de Y est initialisée périodiquement pendant la durée d'une trame par les valeurs calculées selon les formules (17) comme pour le premier point d'une trame. Dans cet exemple de multiplication verticale par trois, la fréquence de ces réinitialisations selon les formules (17) est égale à trois fois la fréquence des trames.

Pour obtenir, en plus de la multiplication, un effet de miroir le signe des incréments $D_{xx}$ et $D_{yx}$ est inversé lors de chaque réinitialisation par les valeurs données par les formules (16) afin d'obtenir des symétries par rapport à des axes verticaux, et le signe des incréments $D_{yy}$ et $D_{xy}$ est inversé lors de chaque réinitialisation avec les valeurs données par les formules (17) afin d'obtenir des symétries par rapport à des axes horizontaux.

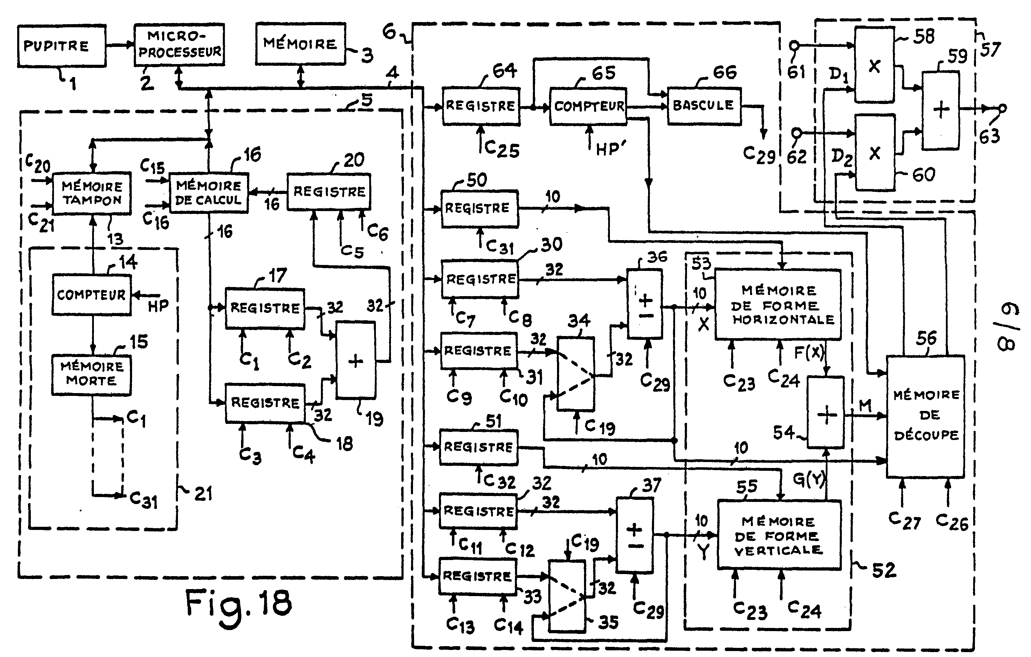

La figure 18 représente le schéma synoptique d'un exemple de réalisation d'un dispositif mettant en œuvre le procédé selon l'invention pour générer une image comportant une découpe dont l'équation est de la forme F(X) + G(Y) = constante. Cet exemple de réalisation comprend un pupitre 1, permettant à un opérateur de commander le dispositif, un microprocesseur 2, une mémoire 3, un bus de données et d'adresses 4, un dispositif 5 dit automate-ligne, parce qu'il fonctionne à la fréquence d'analyse des lignes, un dispositif 6, dit automate-point, parce qu'il fonctionne à la fréquence d'analyse des points, et un commutateur vidéo à gain variable 57. Ce dispositif générateur de formes fait partie d'un mélangeur vidéo qui comprend d'autres dispositifs, par exemple un incrustateur, tous les dispositifs du mélangeur étant commandés par le pupitre 1 qui comporte un microprocesseur relié au bus 4. Dans le dispositif considéré le microprocesseur 2, la mémoire 3, l'automate-ligne 5, et l'automate-point 6, sont reliés au bus 4. Un opérateur commande le dispositif par l'intermédiaire du pupitre 1 et le microprocesseur 2 détermine, à la fréquence des trames, les informations d'initialisation nécessaires au fonctionnement de l'automate-ligne 5 et de l'automate-point 6 en fonction des paramètres choisis pour la découpe, ces paramètres étant stockés dans la mémoire 3 qui est associée au microprocesseur 2. La mémoire 3 stocke notamment des données correspondant à des effets prédéterminés et que l'opérateur déclenche en appuyant simplement sur une touche.

L'automate-ligne 5 comporte une mémoire tampon 13, une mémoire de calcul 16, des moyens de commande 21, trois registres: 17, 18 et 20, et un additionneur 19. La mémoire tampon 13 possède une entrée de données et une entrée d'adresses reliées par le bus 4 au microprocesseur 2, et trois entrées reliées aux moyens de commande 21 pour recevoir une adresse de lecture, un signal de commande de lecture $C_{20}$, et un signal de commande d'écriture $C_{21}$.

Les moyens de commande 21 comportent un compteur 14, incrémenté par un signal d'horloge HP à la fréquence des points, et une mémoire morte 15. Le compteur 14 fournit une adresse de lecture à la mémoire 13 et une adresse de lecture à la mémoire 14. Celle-ci génère des signaux de commande $C_1$ à $C_{32}$ commandant le fonctionnement de tous les éléments du générateur de formes.

Le commutateur vidéo à gain variable 57 est constitué de deux multiplicateurs 58 et 60, et d'un additionneur 59. Il reçoit sur des bornes d'entrées 61 et 62 deux suites de valeurs numériques correspondant à deux signaux vidéo, et fournit sur une borne de sortie 63 une suite de valeurs numériques d'un signal vidéo correspondant à une image constituée par une partie de l'image fournie par le premier signal vidéo, et par une partie de l'image fournie par le second signal vidéo. Le premier signal vidéo est appliqué à la première entrée du multiplicateur 58 qui reçoit sur une seconde entrée une valeur numérique $D_1$. Le second signal vidéo est appliqué à une première entrée du multiplicateur 60 qui reçoit sur une seconde entrée une valeur numérique $D_2$. Les valeurs fournies par les sorties des multiplicateurs 58 et 60 sont additionnées par l'additionneur 59 et les valeurs résultantes constituent les valeurs fournies à la borne de sortie 63.

L'automate-point 6 comporte sept registres: 64, 50, 30, 31, 51, 32, 33; un compteur 65, une bascule 66, deux multiplexeurs 34 et 35, deux additionneurs-soustracteurs 36 et 37, un dispositif 52 de stockage d'une figure, et une mémoire 56 dite mémoire de découpe. Dans cet exemple la figure est représentable par une équation de la forme $F(X) + G(Y)$ = constante. Le dispositif de stockage 52 est constitué par une mémoire vive 53 dite mémoire de forme horizontale, stockant les valeurs de $F(X)$ en fonction des valeurs de X, d'une mémoire vive 55 dite mémoire de forme verticale, stockant les valeurs de $G(Y)$ en fonction des valeurs Y, et d'un additionneur 54. Tous les registres ont une entrée reliée au bus de données et d'adresses 4. Le registre 64 a une sortie reliée à des entrées de commande et d'initialisation du compteur 65 et de la bascule 66, et a une entrée de commande recevant un signal de commande $C_{25}$ fourni par les moyens de commande 21 de l'automate-ligne 5. Le compteur 65 possède une entrée d'horloge recevant un signal d'horloge HP à la fréquence des points, et possède une sortie reliée à une entrée de commande de la bascule 66. La bascule 66 se comporte comme un diviseur de fréquence par deux et fournit un signal de commande $C_{19}$ à une entrée de commande de l'additionneur-soustracteur 36 et à une entrée de commande de l'additionneur-soustracteur 37. Le registre 50 possède une entrée de commande recevant un signal $C_{31}$ fourni par les moyens de commande 21, et une sortie fournissant un mot binaire de dix bits à une entrée de données de la mémoire de forme horizontale 53. Le registre 51 possède une entrée de commande recevant un signal de commande $C_{32}$ fourni par les moyens de commande 21 et une sortie fournissant un mot binaire de dix bits à une entrée de données de la mémoire de forme verticale 55. Le registre 30 possède deux entrées de commande recevant des signaux de commande $C_7$ et $C_8$ fournis par les moyens de commande 21, et possède une sortie fournissant un mot binaire de 32 bits à une première entrée de l'additionneur-soustracteur 36. Le registre 31 possède deux entrées de commande recevant des signaux de commande $C_9$ et $C_{10}$, et possède une sortie fournissant un mot binaire de 32 bits à une première entrée du multiplexeur 34. Une seconde entrée du multiplexeur 34 est reliée à la sortie de l'additionneur-soustracteur 36, et sa sortie est reliée à une seconde entrée de cet additionneur-soustracteur. Les multiplexeurs 34 et 35 sont commandés par un signal de commande $C_{19}$ fourni par les moyens de commande 21.

Le registre 32 est commandé par des signaux de commande $C_{11}$ et $C_{12}$, et possède une sortie fournissant un mot binaire de 32 bits à une première entrée de l'additionneur-soustracteur 37. Le registre 33 est commandé par des signaux de commande $C_{13}$ et $C_{14}$, et possède une sortie fournissant un mot binaire de 32 bits à une première entrée du multiplexeur 35. Le multiplexeur 35 possède une seconde entrée reliée à la sortie de l'additionneur-soustracteur 37, et une sortie fournissant un mot binaire de 32 bits à la seconde entrée de l'additionneur-soustracteur 37.

Le fonctionnement en additionneur ou en soustracteur des additionneurs-soustracteurs 36 et 37 est commandé par le signal de commande $C_{29}$ fournit par la bascule 66. La sortie de l'additionneur-soustracteur 36 fournit un mot binaire de 10 bits à une entrée d'adresses de lecture et d'écriture de la mémoire de forme horizontale 53. La sortie de l'additionneur-soustracteur 37 fournit un mot binaire de 10 bits à une entrée d'adresse de lecture et d'écriture de la mémoire de forme verticale 55. Ces 10 bits sont constitués par les bits de poids $2^{10}$ à $2^{19}$ parmi les 32 bits fournis par la sortie des additionneurs-soustracteurs 36 et 37.

L'écriture et la lecture dans la mémoire de forme horizontale 53 et dans la mémoire de forme verticale 55 sont commandées respectivement par des signaux de commande $C_{23}$ et $C_{24}$. Une sortie de données de la mémoire 53 et une sortie de données de la mémoire 55 sont reliées respectivement à une première et une seconde entrée de l'additionneur 54. La sortie de l'additionneur 54 constitue la sortie du dispositif de stockage 52 et fournit un mot binaire M. Le mot binaire M est appliqué à une entrée d'adresses de lecture de la mémoire de découpe 56. La mémoire 56 possède d'autre part une entrée de données et une entrée d'adresses d'écriture, reliées respectivement à la sortie de l'additionneur-soustracteur 36 et à la sortie du compteur 65, et deux entrées de commande, respectivement pour l'écriture et pour la lecture, recevant les signaux de commande $C_{27}$ et $C_{26}$ fournis par les moyens de commande 21.

Le pupitre 1 du dispositif générateur de formes permet de commander un grand nombre d'effets, et un grand nombre de paramètres pour chaque effet: le numéro de l'effet, sa taille, le cadrage horizontal, le cadrage vertical, le taux de compression verticale ou horizontale, l'angle de rotation, la largeur d'une bordure floue, le nombre de répétitions horizontales, le nombre de répétitions verticales, l'effet de miroir, l'effet de perspective, etc. Un microprocesseur incorporé au pupitre 1 transmet ces paramètres au microprocesseur 2 du générateur de formes et le microprocesseur 2 stocke ces paramètres dans la mémoire 3 et appelle un module de programmes réalisant les initialisations propres à l'effet demandé, ces initialisations comportant notamment le chargement de la mémoire de forme horizontale 53, et de la mémoire de forme verticale 55. Les données des mémoires 53 et 55 sont stockées sous la forme de blibliothèque dans la mémoire 3 car elles sont invariables pour un effet donné. Le microprocesseur 2 calcule des données d'initialisation permettant à l'automate-point 6 de calculer les données de la mémoire de découpe 56 en fonction de la largeur de la bordure floue éventuellement à réaliser. Toutes ces données sont inscrites dans la mémoire tampon 13 de l'automate-ligne 5 pendant la durée d'une trame, sous la commande du microprocesseur 2. Pendant la durée de la suppression de trame ces données sont transférées, par le bus 4 de la mémoire tampon 13 vers les registres 64, 50, 30, 31, 51, 32, 33. En outre la mémoire tampon 13 fournit des données d'initialisation de l'automate-ligne 5, qui sont chargées dans la mémoire de calcul 16. Ces données d'initialisation sont la valeur d'adresse X(0, 0), Y(0, 0), les valeurs des incréments: $k \cdot D_{xy}$ et $k \cdot D_{yy}$, les valeurs des adresses (X, Y) pour l'effet de miroir ou l'effet de répétition.

La lecture de la mémoire tampon 13 est réalisée pendant la suppression trame à une adresse fournie par la sortie du compteur 14, sous la commande du signal de commande $C_{21}$ fourni par les moyens de commande 21.

Tout d'abord les moyens de commande 21 commandent le transfert de la mémoire tampon 13 vers le registre 30 et le registre 31 de données permettant à l'additionneur-soustracteur 36 de calculer les données à charger dans la mémoire de découpe 56 pour obtenir une découpe ayant la taille souhaitée et ayant une bordure floue de la largeur souhaitée. Les valeurs calculées sont par exemple celles données par les graphes représentés sur la figure 11. Au commencement de ce calcul le multiplexeur 34 relie la sortie du registre 31 à la seconde entrée de l'additionneur-soustracteur 36, puis le multiplexeur 34 relie la sortie de l'additionneur soustracteur 36 à sa seconde entrée, sous la commande du signal $C_{19}$ fourni par les moyens de commande 21.

D'autre part les moyens de commande 21 commandent le transfert, de la mémoire tampon 13 vers la mémoire de forme horizontale 53 et la mémoire de forme verticale 55, des données définissant la forme de la figure à découper. Ces données transitent respectivement par le registre 50 et par le registre 51, puis sont inscrites dans les mémoires 53 et 55 à des adresses fournies respectivement par les additionneurs-soustracteurs 36 et 37 qui calculent une suite d'adresses allant de 0 à 1023 à partir d'une valeur initiale 0 stockée dans le registre 31 et dans le registre 33, et à partir d'une valeur d'incrément, égale à l'unité, stockée dans le registre 30 et dans le registre 32. Au début de ce calcul les multiplexeurs 34 et 35 sont commutés de façon à relier respectivement le registre 31 et le registre 33 à la seconde entrée de l'additionneur-soustracteur 36 et à la seconde entrée de l'additionneur-soustracteur 37.

Ensuite les moyens de commande 21 commandent le transfert de la mémoire tampon 13 aux registres 30 et 32 de valeurs d'incréments $k \cdot D_{xx}$ et $k \cdot D_{yy}$, et vers les registres 31 et 33 de valeurs d'adresses X(O, $Y_3$) et Y(O, $Y_3$) correspondant au premier point de la prochaine trame de l'image transformée.

Durant chaque suppression de ligne les moyens de commande 21 commandent la mémoire de calcul 16 et les registres 17, 18, 20 afin de calculer les adresses correspondant au premier point de la ligne suivante. Ces valeurs d'adresses sont stockées dans la mémoire de calcul 16 puis sont transmises par le bus 4 aux registres 30 et 32.

Dans cet exemple de réalisation, les moyens de stockage 52 permettent de générer des formes décrites par une équation de la forme H(X, Y) = F(X) + G(Y). Le mot binaire M fourni par la sortie de l'additionneur 54 a pour valeur H(X, Y). La mémoire de découpe 56 est prévue pour fournir deux signaux de commande, de valeurs $D_1$ et $D_2$, permettant de réaliser des bordures floues. L'adaptation de la mémoire de découpe pour réaliser une bordure colorée selon le procédé exposé précédemment, est à la portée de l'homme de l'art.

Dans cet exemple il est prévu de pouvoir réaliser une multiplication des motifs avec ou sans effet de miroir. Les moyens de commande 21 commandent le chargement d'un mot binaire dans le registre 64 pour commander et initialiser le compteur 65 et la bascule 66, afin de fournir un signal d'horloge à la bascule 66 aux instants correspondant au début du balayage d'un motif sur chaque ligne. La bascule 66 permet alors de générer le signal de commande $C_{29}$ commandant alternativement une incrémentation et une décrémentation des adresses fournies par les additionneurs-soustracteurs 36 et 37 afin d'obtenir l'effet de miroir. Dans le cas où l'effet de miroir n'est pas souhaité une sortie du registre 64 fournit à une entrée d'inhibition de la bascule 66 un signal permettant de maintenir le signal de commande $C_{29}$ à une valeur fixée faisant fonctionner les additionneurs-soustracteurs 36 et 37 comme additionneurs.

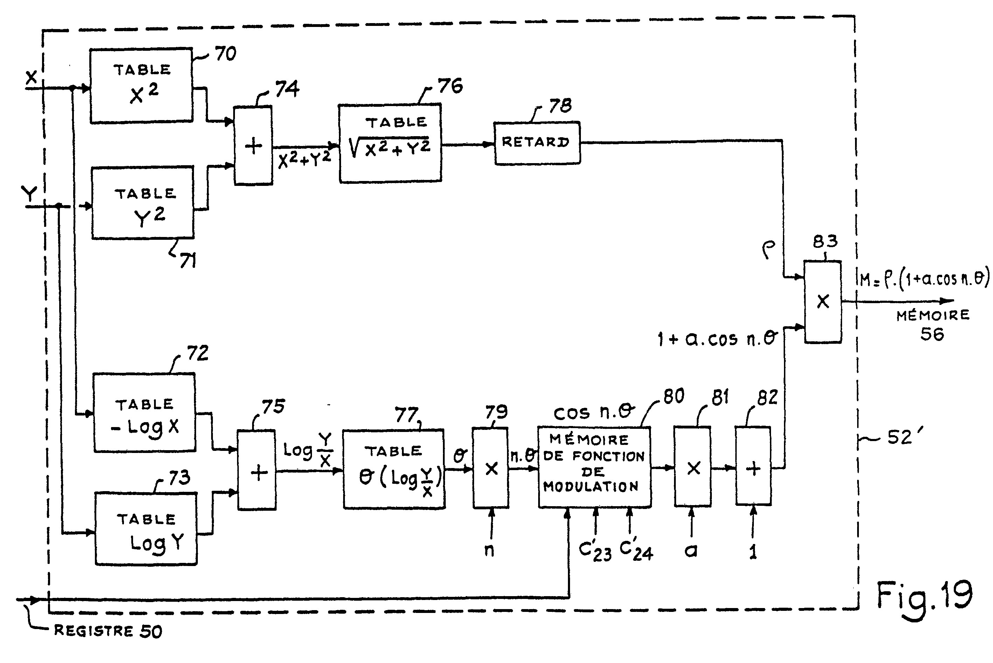

La figure 19 représente une variante 52' du dispositif 52 de stockage de l'image initiale, pour générer une figure obtenue en modulant la forme d'un cercle par une sinusoïde. Dans cet exemple une sortie du dispositif 52' fournit un mot binaire M dont la valeur est égale à $\rho \cdot (1 + a \cdot \cos n \cdot \varphi)$, lorsque ce dispositif est adressé par des valeurs d'adresse X et Y. Ce dispositif 52 comporte six mémoires vives: 70, 71, 72, 73, 76, et 77; stockant les tables des fonctions: $X^2$, $Y^2$, Log Y, $-$ Log X, $\sqrt{X^2+Y^2}$, et $\Theta$ (Log $\frac{Y}{X}$); une mémoire vive 80, trois additionneurs: 74, 75, et 82; un dispositif à retard 78; et trois multiplicateurs 79, 81 et 83. Les mémoires 70 et 72 reçoivent pour valeur d'adresse de lecture la valeur X. Les mémoires 71 et 73 reçoivent pour valeur d'adresse de lecture la valeur Y. Les mémoires 70 et 71 fournissent respectivement les valeurs $X^2$ et $Y^2$ qui sont ensuite additionnées par l'additionneur 74. Les mémoires 72 et 73 fournissent respectivement une valeur $-$ Log X et une valeur Log Y qui sont additionnées ensuite par l'additionneur 75. La mémoire 76 reçoit pour valeur d'adresse de lecture la valeur $X^2+Y^2$ fournie par la sortie de l'additionneur 74, et la mémoire 77 reçoit pour valeur d'adresse de lecture la valeur Log $\frac{Y}{X}$ fournie par la sortie de l'additionneur 75. La sortie de la mémoire 76 fournit une valeur $\rho = \sqrt{X^2+Y^2}$ au dispositif à retard 78 qui la retransmet à une première entrée du multiplicateur 83. La sortie de la mémoire 77 fournit une valeur $\Theta$ = Arctg $\frac{Y}{X}$, correspondant à la valeur de

Log $\frac{Y}{X}$, à une première entrée du multiplicateur 79. Celui-ci réçoit une valeur entière n sur une seconde entrée, et fournit sur sa sortie une valeur nΘ. La valeur nΘ constitue une adresse de lecture pour la mémoire vive 80. La mémoire vive 80 est dite mémoire de fonction de modulation car elle est chargée préalablement par les valeurs d'une fonction destinée à moduler la forme d'un cercle. Ces valeurs sont chargées par une entrée de données reliée à la sortie du registre 50. L'écriture et la lecture dans la mémoire 80 sont commandées respectivement par le signal $C_{23}$ et le signal $C_{24}$ fournis par les moyens de commande 21 comme dans le cas de la variante représentée sur la figure 18. Une sortie de données de la mémoire 80 fournit une valeur cosnΘ à une première entrée du multiplicateur 81 qui réçoit sur une seconde entrée une constante a. La constante a fixe l'amplitude de la modulation appliquée au cercle, alors que la constante n fixe le nombre des alternances visibles sur le cercle modulé. La sortie du multiplicateur 81 fournit une valeur a·cosnΘ à une première entrée de l'additionneur 82 qui réçoit sur une seconde entrée une valeur constante égale à l'unité. La sortie de l'additionneur 82 fournit donc une valeur 1+a·cosnΘ à la seconde entrée du multiplicateur 83. Ce dernier fournit à une entrée d'adresse de lecture de la mémoire de découpe 56 un mot binaire M dont la valeur est ρ·(1+a·cosnΘ).

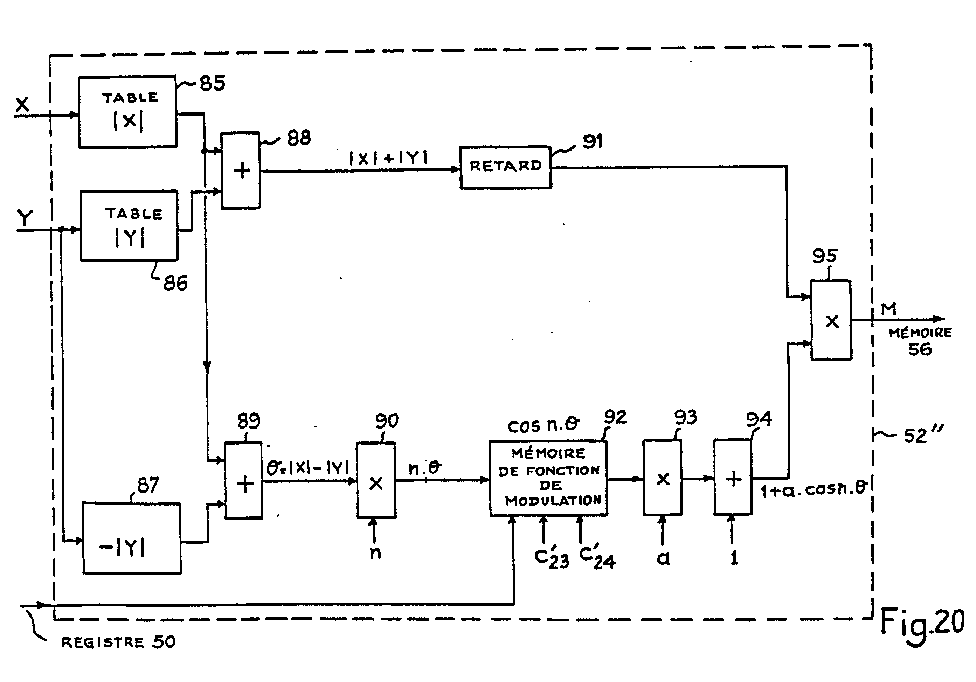

La figure 20 représente une troisième variante, 52″, du dispositif 52 et la figure 18, adaptée pour générer une figure obtenue par une modulation d'un carré. Dans cet exemple la figure est décrite par une équation de la forme:

$$( |X| + |Y| ) \cdot ( 1 + a\cos\cdot n\ |X| - |Y| ) ) = \text{constante}$$

Le dispositif 52″ comporte trois mémoires vives 85, 86, et 87 stockant respectivement les tables des valeurs |X|, |Y| et −|Y|; trois additionneurs: 88, 89 et 94; un dispositif à retard 91; trois multiplicateurs 90, 93, et 95; et une mémoire vive 92. La mémoire 85 réçoit pour valeur d'adresse de lecture la valeur X. Les mémoires 86 et 87 réçoivent pour valeur d'adresse de lecture la valeur Y. Les sorties de données de la mémoire 85 et de la mémoire 86 sont reliées respectivement à la première et à la seconde entrée de l'additionneur 88 qui fournit donc sur sa sortie une valeur |X| + |Y|. La sortie de la mémoire 87 est reliée à une première entrée de l'additionneur 89 dont une seconde entrée est reliée à la sortie de données de la mémoire 85. La sortie de l'additionneur 89 fournit donc une valeur Θ = |X|−|Y|. La valeur Θ est appliquée à une première entrée du multiplicateur 90 qui réçoit sur une seconde entrée une valeur entière constante n qui détermine le nombre d'alternances modulant chaque côté du carré. La sortie du multiplicateur 90 fournit une valeur n·Θ à une entrée d'adresse de lecture de la mémoire vive 92. La mémoire vive 92 est dite mémoire de fonction de modulation car elle stocke une table des valeurs de la fonction cosnΘ en fonction de nΘ. Ces valeurs sont chargées lors de l'initialisation pendant l'intervalle de suppression de trame par l'intermédiaire du registre 50, et sous la commande du signal de commande d'écriture $C_{23}$. La valeur de cosnΘ est lue dans la mémoire 92 à l'adresse nΘ sous l'action du signal de commande $C_{24}$ puis est fournie à une première entrée du multiplicateur 93. Une seconde entrée du multiplicateur 93 réçoit une valeur constante a qui détermine l'amplitude de la modulation appliquée au carré. La sortie du multiplicateur 93 fournit une valeur a·cosnΘ à une première entrée de l'additionneur 94 qui réçoit sur une seconde entrée une valeur constante égale à l'unité. La sortie de l'additionneur 94 fournit une valeur 1+a·cosnΘ à une première entrée du multiplicateur 95. Une seconde entrée du multiplicateur 95 réçoit la valeur |X|+|Y| retardée par le dispositif à retard 91 pour compenser les temps de calcul des multiplicateurs 90, 93, de la mémoire 92, et de l'additionneur 94. La sortie de l'additionneur 95 fournit un mot binaire M dont la valeur est égale à:

$$( |X| + |Y| ) \cdot ( 1 + a\cdot\cos n( |X| - |Y| ) ) .$$

L'invention ne se limite pas aux exemples de réalisation décrits ci-dessus, il est notamment possible de réaliser des générateurs de forme électroniques comportant plusieurs automates-points 6 réalisés selon les trois variantes décrites ci-dessus et ayant des sorties couplées par des comparateurs numériques permettant de combiner les signaux de commande destinés à commander les commutateurs à gain variable, pour obtenir deux signaux de commande commandant un commutateur à gain variable de façon à superposer dans une même image les figures générées par les différents automates-points du générateur de formes.

L'invention ne se limite pas, non plus aux figures représentables par des équations de la forme F(X)+G(Y) = constante, ou se déduisant d'un cercle ou d'un carré par une modulation, elle est applicable à toutes les figures stockables dans un dispositif de stockage dont les valeurs d'adresse sont constituées par les coordonnées des points d'une image initiale, dans un repère cartésien.

## Revendications

1. Procédé pour générer une image vidéo comportant une figure géométrique, cette figure étant représentable dans des coordonnées cartésiennes (X, Y) par une équation de la forme H(X, Y) = constante, composée de fonctions monodimensionnelles, caractérisé en ce qu'il consiste:
— à stocker une table de valeurs pour chacune des fonctions monodimensionnelles composant l'équation de la figure;
— à faire correspondre à chaque point de l'image à générer une valeur de X et une valeur de Y;
— à calculer au fur et à mesure du balayage de l'image à générer, une valeur M=H(X, Y) pour chaque point, en lisant dans les tables les valeurs des fonctions composant l'équation;

– à générer pour chaque point d'image un signal vidéo fonction de M, cette valeur traduisant l'appartenance du point à l'intérieur ou à l'extérieur de la figure, selon que M est inférieure ou supérieure à la valeur fixée pour la constante de l'équation de la figure.

2. Procédé selon la revendication 1, où la figure géométrique est représentable en coordonnées cartésiennes (X, Y) par une équation à variables séparées, de la forme $H(X, Y) = F(X) + G(Y) =$ constante, caractérisé en ce qu'il consiste à stocker deux tables contenant respectivement les valeurs de $F(X)$ et $G(Y)$ à des adresses X et Y respectivement; à lire les valeurs $F(X)$ et $G(Y)$ à des adresses X et Y respectivement; à lire les valeurs $F(X)$ et $G(Y)$ aux adresses X et Y pour chaque point de l'image à générer; et à calculer $M = F(X) + G(Y)$.

3. Procédé selon la revendication 1, où la figure géométrique est représentable en coordonnées polaires $(\rho, \Theta)$ par une équation de la forme $\rho(\Theta)\cdot(1+g(\Theta)) =$ constante, caractérisé en ce qu'il consiste à stocker sept tables contenant respectivement: les valeurs $X^2$ et $- \text{Log } X$, en fonction de X, les valeurs $Y^2$ et $\text{Log } Y$ en fonction de Y, les valeurs de $\rho = \sqrt{X^2+Y^2}$ en fonction de $X^2+Y^2$, les valeurs de $\Theta = \text{Arctg } \frac{Y}{X}$ en fonction de Log $\frac{Y}{X}$, et les valeurs de $g(\Theta)$ en fonction de $\Theta$;

et en ce qu'il consiste, pour chaque point de l'image à générer, à lire dans les tables $X^2$, $Y^2$, $- \text{Log } X$, $\text{Log } Y$ en adressant les tables par les valeurs de X et Y correspondant au point considéré, puis à calculer $X^2 + Y^2$ et $\text{Log } Y - \text{Log } X$, à lire dans les tables $\rho = \sqrt{X^2+Y^2}$, $\Theta(\text{Log } \frac{Y}{X})$, $g(\Theta)$, puis à calculer $M = \rho(\Theta)\cdot(1+g(\Theta))$.

4. Procédé selon la revendication 1, où la figure géométrique est représentable en coordonnées cartésiennes (X, Y) par une équation de la forme:
$(|X| + |Y|) (1+h(|X| - |Y|)) =$ constante, en coordonnées cartésiennes (X, Y), caractérisé en ce qu'il consiste à stocker sept tables contenant respectivement: les valeurs $|X|$ en fonction des valeurs de X, les valeurs de $|Y|$ et les valeurs de $-|Y|$ en fonction des valeurs de Y, et les valeurs de $h(|X|-|Y|)$ en fonction des valeurs de $(|X|-|Y|)$;

en ce qu'il consiste, pour chaque point de l'image à générer, à lire $|X|$, $|Y|$, et $-|Y|$ dans les tables en adressant les tables par les valeurs de X et Y correspondant au point considéré, puis à calculer $|X|+|Y|$ et $|X|-|Y|$, puis à lire $h(|X|-|Y|)$ dans les tables, et à calculer:

$$M=(|X|+|Y|) \cdot (1+h(|X|-|Y|)).$$

5. Dispositif générateur de formes, mettant en œuvre le procédé selon la revendication 1, caractérisé en ce qu'il comporte:
– des moyens de calcul (5 et 30 à 37) pour calculer, à la fréquence des points de l'image à générer, un couple de valeurs d'adresses X et Y;

– un dispositif de stockage (52, ou 52', ou 52'') de la figure géométrique, fournissant un mot binaire M lorsqu'une valeur d'adresse (X, Y) lui est appliquée, la valeur de M étant la valeur prise par l'équation de la figure au point de coordonnées (X, Y) dans un repère cartésien;

– un dispositif (56) fournissant au moins un signal $(D_1, D_2)$ fonction de la valeur M, pour traduire l'appartenance d'un point de l'image à la figure et pour commander au moins une caractéristique d'un signal vidéo.

6. Dispositif selon la revendication 5, mettant en œuvre le procédé selon la revendication 2, la figure géométrique étant représentable dans des coordonnées cartésiennes (X, Y) par une équation de la forme $H(X, Y) = F(X) + G(Y) =$ constante, caractérisé en ce que le dispositif (52) de stockage de la figure comporte:
– deux mémoires (52, 55) recevant respectivement pour adresses de lecture X et Y, et fournissant les valeurs $F(X)$ et $G(Y)$ respectivement;

– un additionneur (54) recevant les valeurs $F(X)$ et $G(Y)$ fournies par les mémoires (53, 55) et fournissant une valeur $M=F(X)+G(Y)$.

7. Dispositif selon la revendication 5, mettant en œuvre le procédé selon la revendication 3, la figure géométrique étant représentable en coordonnées polaires $(\rho, \Theta)$ par une équation de la forme:
b. $(1+a\cdot g'(n\cdot\Theta)) =$ constante, où b, a, n sont des constantes, n étant un entier,

caractérisé en ce que le dispositif (52') de stockage de la figure comporte:
– des premières mémoires (70, 71) stockant les valeurs de $X^2$ et $Y^2$ en fonction des valeurs de X et Y respectivement;

– des secondes mémoires (72, 73) stockant les valeurs de $- \text{Log } X$ et $\text{Log } Y$ en fonction des valeurs de X et Y respectivement;

– un premier additionneur (74) couplés aux sorties des premières mémoires (70, 71) et fournissant une valeur $X^2+Y^2$;

– un second additionneur (75), couplé aux sorties des secondes mémoires (72, 73) et fournissant une valeur $\text{Log } \frac{Y}{X}$;

– une troisième mémoire (76), dont l'entrée d'adresse est couplée à la sortie du premier additionneur (74), et stockant les valeurs de $\rho = \sqrt{X^2+Y^2}$ en fonction des valeurs de $X^2+Y^2$;

– une quatrième mémoire (77), dont l'entrée d'adresse est couplée à la sortie du second additionneur (75), et stockant les valeurs de $\Theta = \text{Arctg } \frac{Y}{X}$ en fonction des valeurs de $\text{Log } \frac{Y}{X}$;

– un premier multiplicateur (79), pour multiplier par n une valeur de $\Theta$ fournie par la quatrième mémoire (77);

– une cinquième mémoire (80), dont l'entrée d'adresse reçoit une valeur $n\cdot\Theta$ fournie par le premier multiplieur (79), et stockant les valeurs de $g'(n\cdot\Theta)$;

– un second multiplieur (81) pour multiplier par la valeur a une valeur de g′(n·Θ) fournie par cinquième mémoire (80);

– un troisième additionneur (82) pour augmenter d'une unité une valeur de a·g′(n·Θ) fournie par le second multiplicateur (81);

– un dispositif à retard (78) pour retarder une valeur de ρ fournie par la troisième mémoire (76), d'un temps égal au temps de calcul de la quatrième mémoire (77), de la cinquième mémoire (80), du premier et du second additionneur (79, 82) et du second multiplicateur (81);

– un troisième multiplicateur (83) pour multiplier la valeur de ρ, retardée par le dispoisitif à retard (78), par la valeur de $1 + a·g′(n·Θ)$ fournie par le troisième additionneur (82), et fournir une valeur $M = ρ·(1 + a·g′(n·Θ))$.

8. Dispositif selon la revendication 5, mettant en œuvre le procédé selon la revendication 4, la figure géométrique étant représentable en coordonnées cartésiennes (X, Y) par une équation de la forme:

$$(|X| + |Y|) · (1 + a·h′(n·(|X| - |Y|))) = \text{constante},$$

où a et n sont des constantes, n étant un entier, caractérisé en ce qu'il comporte:

– une première, une deuxième, et une troisième mémoire (85, 86, 87) stockant respectivement les valeurs de $|X|$, $|Y|$ et $-|Y|$, en fonction des valeurs de X et Y respectivement;

– un premier additionneur (88), recevant des valeurs de $|X|$ et $|Y|$ fournies par la première et la deuxième mémoire (85, 86) et fournissant une valeur de $X + Y$;

– un second additionneur (89), recevant des valeurs de X et $-Y$ fournies par la deuxième et la troisième mémoire (86, 87), et fournissant une valeur de $Θ = |X| - |Y|$;

– un premier multiplicateur (90) multipliant par n la valeur de Θ fournie par le second additionneur (89);

– une quatrième mémoire (92) recevant pour adresse de lecture une valeur de n·Θ fournie par le premier multiplicateur (90) et stockant les valeurs de la fonction h′(n·Θ) en fonction des valeurs de n·Θ;

– un second multiplicateur (93) multipliant par a une valeur de h′(n·Θ) fournie par la quatrième mémoire (92);

– un troisième additionneur (94) augmentant d'une unité une valeur de a·h′(n·Θ) fournie par le second multiplicateur (93);

– un dispositif à retard (91) retardant la valeur de $|X| + |Y|$ fournie par le premier additionneur (88) d'un temps égal au temps de calcul du premier et du second multiplicateur (90, 93), de la quatrième mémoire (92), et du troisième additionneur (94);

– un troisième multiplicateur (95), multipliant la valeur de $|X| + |Y|$, retardée par le dispositif à retard (91), par la valeur de $1 + a·h′(n·Θ)$ fournie par le troisième additionneur (94), et fournissant une valeur $M = (|X| + |Y|) · (1 + a·h′(n·(|X| + |Y|)))$.

**Patentansprüche**

1. Verfahren zur Erzeugung eines Videobildes, das eine geometrische Figur enthält, wobei diese Figur in kartesischen Koordinaten (X, Y) durch eine Gleichung der Form H(X, Y) − konst dargestellt werden kann und diese Gleichung aus eindimensionalen Funktionen zusammengesetzt ist, dadurch gekennzeichnet, dass es folgende Verfahrensschritte aufweist:

– Speicherung einer Wertetabelle für jede der eindimensionalen Funktionen, die die Gleichung der Figur bilden;

– Zuordnung eines Wertes X und eines Wertes Y zu jedem Punkt des zu erzeugenden Bilds;

– Berechnung eines Wertes M = (H(X, Y) für jeden Punkt im Verlauf der Abtastung des zu erzeugenden Bilds, wobei in den Tabellen die Werte der die Gleichung bildenden Funktionen gelesen werden;

– Erzeugung eines Videosignals in Abhängigkeit von M für jeden Punkt des Bildes, wobei dieser Wert die Zugehörigkeit des Punktes zum Innenbereich oder zum Aussenbereich der Figur angibt, je nachdem, ob M kleiner oder grösser als der für die Konstante der Gleichung der Figur festgelegte Wert ist.

2. Verfahren nach Anspruch 1, in dem die geometrische Figur in kartesischen Koordinaten (X, Y) durch eine Gleichung mit getrennten Variablen der Form $H(X, Y) = F(X + G(Y) = \text{konst}$ darstellbar ist, dadurch gekennzeichnet, dass es darin besteht, zwei die Werte von F(X) bzw. G(Y) enthaltende Tabellen an Adressen X bzw. Y zu speichern, die Werte F(X) und G(Y) an den Adressen X und Y für jeden Punkt des zu erzeugenden Bilds zu lesen und den Wert $M = F(X) = G(Y)$ zu berechnen.

3. Verfahren nach Anspruch 1, in dem die geometrische Figur in Polarkoordinaten (ρ, Θ durch eine Gleichung der Form $ρ(Θ)· (1 + g(Θ)) = \text{konst}$ dargestellt werden kann, dadurch gekennzeichnet, dass es darin besteht, sieben Tabellen zu speichern, die die Werte $X^2$ und $-\text{Log } X$ abhängig von X, die Werte $Y^2$ und $\text{Log } Y$ abhängig von Y, die Werte $ρ = \sqrt{X^2 + Y^2}$ abhängig von $(X^2 + Y^2)$, die Werte $Θ = \text{Arctg } Y/X$ abhängig von $\text{Log } Y/X$ und die Werte g(Θ) abhängig von Θ enthalten, und dass das Verfahren darin besteht, für jeden Punkt des zu erzeugenden Bilds in den Tabellen $X^2$, $Y^2$, $-\text{Log } X$, $\text{Log } Y$ durch Adressierung der Tabellen über die Werte von X bzw. Y entsprechend dem betrachteten Punkt auszulassen, dann $X^2 + Y^2$ und $\text{Log } Y - \text{Log } X$ zu berechnen, in den Tafeln $ρ = \sqrt{X^2 + Y^2}$, $Θ(\text{Log } Y/X)$ und G(Θ) zu lesen und dann $M = ρ(Θ) · (1 + g(Θ))$ zu berechnen.

4. Verfahren nach Anspruch 1, in dem die geometrische Figur in kartesischen Koordinaten (X, Y) durch eine Gleichung der Form

$(|X| + |Y|) (1 + h(|X| - |Y|) = \text{konst}$ darstellbar ist, dadurch gekennzeichnet, dass sieben Tabellen gespeichert werden, die die Werte $|X|$ abhängig von den Werten von X, die Werte $|Y|$ und die

Werte $-|Y|$ abhängig von den Werten von Y und die Werte $h(|X| -|Y|)$ abhängig von den Werten von $(|X| - |Y|)$ enthalten, und dass für jeden zu erzeugenden Punkt $|X|$, $|Y|$, und $-|Y|$ in den Tabellen durch Adressierung der Tabellen mit den dem betrachteten Punkt entsprechenden Werten von X und Y gelesen werden, dann $|X| + |Y|$ und $|X| - |Y|$ berechnet werden, dann in den Tabellen $h(|X| - |Y|)$ gelesen wird und schliesslich

$$M = (|X| + |Y|) \cdot (1+h(|X| - |Y|) )$$

berechnet wird.

5. Vorrichtung zur Erzeugung von Formen gemäss dem Verfahren nach Anspruch 1, dadurch gekennzeichnet, dass sie aufweist:
— Rechenmittel (5 und 30 bis 37) zur Berechnung eines Adressenwertepaares X und Y mit der Frequenz der zu erzeugenden Bildpunkte.
— eine Speichervorrichtung (52 oder 52' oder 52") für die geometrische Figur, die ein Binärwort M liefert, wenn ihr ein Adressenwert (X, Y) angelegt wird, wobei der Wert von M der durch die Gleichung der Figur im Punkt mit den Koordinaten (X, Y) im kartesischen Netz gegebene Wert ist,
— eine Vorrichtung (56), die mindestens ein vom Wert M abhängiges Signal ($D_1$, $D_2$) liefert, um die Zugehörigkeit eines Bildpunkts zur Figur wiederzugeben, und um mindestens eine Charakteristik eines Videosignals zu steuern.

6. Vorrichtung nach Anspruch 5 zur Anwendung des Verfahrens nach Anspruch 2, wobei die geometrische Figur in kartesischen Koordinaten (X, Y) durch eine Gleichung der Form $H(X, Y) = F(X)+G(Y) = $ konst darstellbar ist, dadurch gekennzeichnet, dass die Vorrichtung (52) zur Speicherung der Figur aufweist:
— zwei Speicher (52,55), denen die Leseadressen X bzw. Y zugeführt werden und die die Werte von $F(X)$ bzw. $G(Y)$ liefern,
— einen Addierer (54), der die von den Speichern (53, 55) gelieferten Werte $F(X)$ und $G(Y)$ zugeführt erhält und einen Wert $M = F(X)+G(Y)$ liefert.

7. Vorrichtung nach Anspruch 5 zur Anwendung des Verfahrens nach Anspruch 3, wobei die geometrische Figur in Polarkoordinaten ($\rho$, $\Theta$) durch eine Gleichung der Form $b \cdot (1+a \cdot g'(n \cdot \Theta) )$ = konst darstellbar ist, wobei b, a, n Konstante sind und n eine ganze Zahl ist, dadurch gekennzeichnet, dass die Vorrichtung (52') zur Speicherung der Figur aufweist:
— erste Speicher (70, 71), die die Werte von $X^2$ und $Y^2$ abhängig von den Werten von X bzw. Y speichern,
— zweite Speicher (72, 73), die die Werte von $-\text{Log } X$ und $\text{Log } Y$ abhängig von den Werten von X bzw. Y speichern,
— einen ersten Addierer (74), der an die Ausgänge der ersten Speicher (70, 71) gekoppelt ist und einen Wert $X^2+Y^2$ liefert,
— einen zweiten Addierer (75), der an die Ausgänge der zweiten Speicher (72, 73) angeschlossen ist und einen Wert von $\text{Log } Y/X$ liefert,
— einen dritten Speicher (76), dessen Adresseneingang an den Ausgang des ersten Addierers (74) angeschlossen ist und der die Werte von $\rho = \sqrt{X^2+Y^2}$ abhängig von den Werten von $X^2+Y^2$ speichert,
— einen vierten Speicher (77, dessen Adresseneingang an den Ausgang des zweiten Addierers (75) gekoppelt ist und der die Werte $\Theta = \text{Arctg } Y/X$ abhängig von den Werten von $\text{Log } Y/X$ speichert,
— einen ersten Multiplizierer (79), um einen vom vierten Speicher (77) gelieferten Wert von $\Theta$ mit n zu multiplizieren,
— einen fünften Speicher (80), dessen Adresseneingang einen vom ersten Multiplizierer (79) gelieferten Wert $n \cdot \Theta$ empfängt und der die Werte von $g'(n \cdot \Theta)$ speichert,
— einen zweiten Multiplizierer (81), um einen vom fünften Speicher (80) gelieferten Wert von $g'(n \cdot \Theta)$ mit dem Wert a zu multiplizieren,
— einen dritten Addierer (82), um einen vom zweiten Multiplizierer (81) gelieferten Wert von $a \cdot g'(n \cdot \Theta)$ um eine Einheit zu vergrössern,
— eine Verzögerungsvorrichtung (78), um einen vom dritten Speicher (76) gelieferten Wert von $\rho$ um eine Zeit gleich der Rechenzeit des vierten Speichers (77), des fünften Speichers (80), des ersten und zweiten Addierers (79, 82) und des zweiten Multiplizierers (81) zu verzögern,
— einen dritten Multiplizierer (83), um den in der Verzögerungsvorrichtung (78) verzögerten Wert von $\rho$ mit dem Wert von $1+a \cdot g'(n \cdot \Theta)$, der vom dritten Addierer (82) geliefert wird, zu multiplizieren und einen Wert von $M = \rho(1+a \cdot g'(n \cdot \Theta) )$ zu liefern.

8. Vorrichtung nach Anspruch 5 zur Anwendung des Verfahrens nach Anspruch 4, wobei die geometrische Figur in kartesischen Koordinaten (X, Y) durch eine Gleichung der Form $(|X|+|Y|) \cdot (1+a \cdot h'(n \cdot (|X|-|Y|) ) )$ = konst darstellbar ist, wobei a und n Konstante sind und n eine ganze Zahl ist, dadurch gekennzeichnet, dass sie aufweist:
— einen ersten, einen zweiten und einen dritten Speicher (85, 86, 87), die die Werte von $|X|$, $|Y|$ bzw. $-|Y|$ abhängig von den Werten von X bzw. Y speichern,
— einen ersten Addierer (88), der die vom ersten und zweiten Speicher (85, 86) gelieferten Werte von $|X|$ und $|Y|$ zugeführt erhält und einen Wert $X+Y$ liefert,
— einen zweiten Addierer (89), der die vom zweiten und vom dritten Speicher (86, 87) gelieferten Werte X und $-Y$ zugeführt erhält und einen Wert $\Theta = |X|-|Y|$ liefert,
— einen ersten Multiplizierer (90), der den vom zweiten Addierer (89) gelieferten Wert $\Theta$ mit n multipliziert,
— einen vierten Speicher (92), der als Leseadresse einen vom ersten Multiplizierer (90) gelieferten Wert $n \cdot \Theta$ zugeführt erhält und die Werte der Funktion $h'(n \cdot \Theta)$ abhängig von den Werten $n \cdot \Theta$ speichert,
— einen zweiten Multiplizierer (93), der einen vom vierten Speicher (92) gelieferten Wert von h'(n·Θ) mit a multipliziert,

– einen dritten Addierer (94), der einen vom zweiten Multiplizierer (93) gelieferten Wert von a·h'(n·Θ) um eine Einheit vergrössert,

– eine Verzögerungseinrichtung (91), die den vom ersten Addierer (88) gelieferten Wert von |X|+|Y| um eine Zeitdauer verzögert, die gleich der Rechenzeit des ersten und zweiten Multiplizierers (90, 93), des vierten Speichers (92) und des dritten Addierers (94) ist,

– einen dritten Multiplizierer (95), der den von der Verzögerungsvorrichtung (91) verzögerten Wert |X|+|Y| mit dem Wert 1+a·h'(n·Θ), der vom dritten Addierer (94) geliefert wird, mutlipliziert und einen Wert
M(|X|+|Y|) · (1+a·h'(n·(|X|+|Y|) ) ) liefert.

## Claims

1. A method of generating a video picture comprising a geometric design which can be represented in cartesian coordinates (X, Y) by an equation of the type $H(X, Y) = $ const, this equation being composed of monodimensional functions, characterized in that it consists in:

– storing a table of values for each of the monodimensional functions composing the equation of the design,

– making a value of X and a value Y correspond to any point of the picture to be generated,

– computing a value $M = H(X, Y)$ for any point in the course of the scanning of the picture to be generated, by reading, in the tables, the values of the functions composing the equation,

– generating a video signal depending on M for each picture point, this value translating the association of the point to the inside or the outside of the design according to the value of M being lower or higher than the value fixed for the constant value of the equation of the design.

2. A method according to claim 1, in which the geometric design can be represented in cartesian coordinates (X, Y) by an equation having separated variables, of the type $H(X, Y) = F(X)+G(Y) = $ const, characterized in that it consists in storing two tables containing respectively the values of F(X) and G(Y) at addresses X and Y respectively, in reading the values F(X) and G(Y) at the addresses X and Y for any point of the picture to be generated, and in computing $M = F(X)+G(Y)$.

3. A method according to claim 1, in which the geometric design can be represented in polar coordinates (ρ, Θ) by an equation of the type ρ(Θ)·(1+g(Θ) ) = const, characterized in that it consists in storing seven tables containing respectively the values $X^2$ and –Log X as a function of X, the values $Y^2$ and Log Y as a function of Y, the values $\rho = \sqrt{X^2+Y^2}$ as a function of $(X^2+Y^2)$, the values of Θ=Arctg Y/X as a function of Log Y/X and the values of g(Θ) as a function of Θ,

– and that it consists in reading, in the tables, for any point of the picture to be generated, $X^2$, $Y^2$, –Log X, Log Y by addressing the tables with the values of X and Y corresponding to the respective point, then in computing $X^2+Y^2$ and Log Y–Log X, in reading $\rho = \sqrt{X^2+Y^2}$, Θ(Log Y/X), g(Θ) in the tables, then in computing $M = \rho·(\Theta) · (1+g(\Theta))$.

4. A method according to claim 1, in which the geometric design can be represented in cartesian coordinates (X, Y) by an equation of the type (|X|+|Y|) (1+h|X|–|Y|) ) = const, characterized in that it consists in storing seven tables containing respectively the values |X| as a function of the values of X, the values |Y| and the values –|Y| as a function of the values of Y and the values h(|X|–|Y|) as a function of the values of (|X|–|Y|),

– and that it consists in reading, for any point of the picture to be generated, the values |X|, |Y|, and –|Y| in the tables by addressing the tables with the values of X and Y corresponding to the respective points, then in computing |X|+|Y| and |X|–|Y|, then in reading h(|X|–|Y|) in the tables, and in computing

$$M = (|X|+|Y|) · (1+h(|X|-|Y|)).$$

5. A device for generating forms applying the method according to claim 1, characterized in that it comprises:

– computing means (5 and 30 to 37) for computing a pair of address values X and Y at the frequency of the points of the picture to be generated;

– a storage device (52 or 52' or 52") of the geometric design supplying a binary word M whenever an address value (X, Y) is applied thereto, the value of M being the value taken by the equation of the design at the point having coordinates (X, Y) in a cartesian reference network,

– a device (56) supplying at least one signal $(D_1, D_2)$ as a function of the value M for defining if a point of the picture belongs to the design, and for controlling at least one characteristic of a video signal.

6. A device according to claim 5, applying the method according to claim 2, wherein the geometric design can be represented in cartesian ccoordinates (X, Y) by an equation of the type $H(X, Y) = F(X)+G(Y) = $ const, characterized in that the design storage device (52) comprises:

– two memories (52, 55) receiving respectively X and Y as read addresses and supplying respectively the values F(X) and G(Y),

– an adder (54) receiving the values F(X) and G(Y) supplied by the memories (53, 55) and supplying a value $M = F(X)+G(Y)$.

7. A device according to claim 5, applying the method according to claim 3, wherein the geometric design can be represented in polar coordinates (ρ, Θ) by an equation of the type b·(1+a·g'(n·Θ) ) = const, in which b, a and n are constant values and n is an integer, characterized in that the design storage device (52') comprises:

– first memories (70, 71) storing the values of $X^2$ and $Y^2$ as a function of X and Y respectively,

– second memories (72, 73) storing the values

of $-\text{Log } X$ and $\text{Log } Y$ as a function of the values of $X$ and $Y$ respectively,

— a first adder (74) coupled to the outputs of the first memories (70, 71) and supplying a value $X^2+Y^2$,

— a second adder (75) coupled to the outputs of the second memories (72, 73) and supplying a value $\text{Log } Y/X$,

— a third memory (76), the address input of which is coupled to the output of the first adder (74) and which stores the values of $\rho = \sqrt{X^2+Y^2}$ as a function of the values of $X^2+Y^2$,

— a fourth memory (77), the address input of which is coupled to the output of the second adder (75) and which stores the values of $\Theta = \text{Arctg } Y/X$ as a function of the values of $\text{Log } Y/X$,

— a first multiplier (79) for multiplying by n a value of $\Theta$ supplied by the fourth memory (77),

— a fifth memory (80), the address input of which receives a value $n \cdot \Theta$ supplied by the first multiplier (79) and which stores the values of $g'(n \cdot \Theta)$,

— a second multiplier (81) for multiplying by the value a, a value of $g'(n \cdot \Theta)$ supplied by the fifth memory (80),

— a third adder (82) for incrementing by one unit a value of $a \cdot g'(n \cdot \Theta)$ supplied by the second multiplier (81),

— a delay device (78) for delaying a value of $\rho$ supplied by the third memory (76) for a time duration which is equal to the computing time of the fourth memory (77), of the fifth memory (80), of the first and the second adder (79, 82) and of the second multiplier (81).

— a third multiplier (83) for multiplying the value of $\rho$ delayed by the delay device (78), by the value of $1+a \cdot g'(n \cdot \Theta)$ supplied by the third adder (82), and for supplying a value of $M = \rho(1+a \cdot g'(n \cdot \Theta))$.

8. A device according to claim 5, applying the method according to claim 4, wherein the geometric design is represented in cartesian coordinates (X, Y) by an equation of the type:

$(|X|+|Y|) \cdot (1+a \cdot h'(n \cdot (|X|-|Y|))) = \text{const}$, in which a and n are constant values and n is an integer, characterized in that it comprises:

— a first, a second and a third memory (85, 86, 87) storing respectively the values $|X|$, $|Y|$ and $-|Y|$ as a function of the values of X and Y respectively,

— a first adder (88) receiving the values $|X|$ and $|Y|$ supplied by the first and the second memory (85, 86) and supplying a value $X+Y$,

— a second adder (89) receiving the values of X and $-Y$ supplied by the second and third memory (86, 87) and supplying a value $\Theta = |X|-|Y|$,

— a first multiplier (90) multiplying by n the value $\Theta$ supplied by the second adder (89),

— a fourth memory (92) receiving as read address a value $n \cdot \Theta$ supplied by the first muliplier (90) and storing the values of the function $h'(n \cdot \Theta)$ as a function of the values $n \cdot \Theta$,

— a second multiplier (93) multiplying a value $h'(n \cdot \Theta)$ supplied by the fourth memory (92), by the value a,

— a third adder (94) incrementing by one unit a value $a \cdot h'(n \cdot \Theta)$ supplied by the second multiplier (93),

— a delay device (91) delaying the value $|X|+|Y|$ supplied by the first adder (88) by a time duration equal to the computing time of the first and the second multiplier (90, 93), of the fourth memory (92) and the third adder (94),

— a third multiplier (95) multiplying the value $|X|+|Y|$, delayed by the delay device (91), by the value $1+a \cdot h'(n \cdot \Theta)$ supplied by the third adder (94), and supplying a value $M = (|X|+|Y|) \cdot (1+a \cdot h'(n \cdot |X|+|Y|)))$.

Fig.1

Fig.2

Fig.3

Fig.4

Fig.5

Fig.6

0 125 989

3/8

Fig.9

Fig.7

Fig.8

Fig.10

Fig.11

21

$X^2 + Y^2 = K_3$

$X^2 + Y^2 = K_4$

Fig.12

Fig.13

Fig.14

23

Fig. 15

Fig.16

Fig. 17

Fig. 18

0 125 989

Fig.19

Fig.20

8/8